(19)

Europäisches Patentamt
European Patent Office
Office européen des brevets

(11) **EP 3 611 688 A1**

(12) **EUROPEAN PATENT APPLICATION**
published in accordance with Art. 153(4) EPC

(43) Date of publication:
**19.02.2020  Bulletin 2020/08**

(21) Application number: **18771211.2**

(22) Date of filing: **19.03.2018**

(51) Int Cl.:
**G06Q 30/08** *(2012.01)*      **G06Q 50/06** *(2012.01)*

(86) International application number:
**PCT/JP2018/010904**

(87) International publication number:
**WO 2018/174030 (27.09.2018 Gazette 2018/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.03.2017  JP 2017060224**

(71) Applicant: **Hitachi, Ltd.**
**Tokyo 100-8280 (JP)**

(72) Inventors:
• **WATANABE, Tohru**
**Tokyo 100-8280 (JP)**

• **UTSUMI, Masato**
**Tokyo 100-8280 (JP)**
• **IKEMOTO, Yu**
**Tokyo 100-8280 (JP)**
• **OKAMOTO, Yoshihisa**
**Tokyo 100-8280 (JP)**
• **SHIGEMORI, Ikuo**
**Tokyo 100-8280 (JP)**
• **IIMURA, Hiroshi**
**Tokyo 100-8280 (JP)**
• **OGAWA, Hiroaki**
**Tokyo 100-8280 (JP)**

(74) Representative: **Mewburn Ellis LLP**
**City Tower**
**40 Basinghall Street**
**London EC2V 5DE (GB)**

(54) **TRANSACTION PLANNING DEVICE AND TRANSACTION PLANNING METHOD**

(57)      A trading planning apparatus includes an order quantity planning section determining trading quantities with a plurality of trade connections from a trading cumulative quantity and estimated data about future quantities related to demand and the trade connections, a split-time-based split order planning section generating trading and ordering data containing data about an order price or an order quantity related to trading and ordering in each of planned trading periods that are periods into which a trading period, during which trading can be conducted, is subdivided, and a future quantity estimation section estimating estimated quantities of data related to errors in the future quantities estimated from actual record values, the order quantity planning section increasing or reducing the trading quantity of any of the trade connections when a difference between a sum of the trading quantities of all of the trade connections and a future quantity demanded is equal to or greater than a predetermined value.

FIG. 1A

## Description

Technical Field

The present invention relates to a trading planning apparatus and a trading planning method for laying down an order plan to each of exchanges and trade connections for an energy business operator.

Background Art

There is known a system for planning an order to an exchange to meet supply in response to supply destinations' demand that changes on a daily basis. A system described in Patent Document 1 is designed to determine a bid quantity and a bid price in an electricity market from a power generation plan created on the basis of demand estimate data and power supply data. It is thereby possible to conduct bidding uniquely assuming a price in the electricity market.

There is also known a system for conducting trading in a market in a constantly changing market condition.

Patent Document 2 describes a system in which while a trading quantity is split into a plurality of slices and each slice is made to be associated with a time slot of trading time to automatically execute an order, the system being designed to determine whether an order quantity satisfies an order schedule change condition preset on the basis of market data and if the order quantity satisfies the order schedule change condition, to increase or reduce a planned execution rate by a predetermined value at each order timing for flexibly and automatically adjusting an order quantity in response to a market trend. It is thereby possible to conduct trading that satisfies a preset total trading quantity.

Prior Art Document

Patent Document

Patent Document 1: JP-2007-159239-A
Patent Document 2: JP-2008-209987-A

Summary of the Invention

Problems to be Solved by the Invention

However, the system of Patent Document 1 gives no consideration to the fact that the price of energy to be traded on date and hour basis varies during a trading period; thus, with the system, it is impossible to conduct rational trading when the price of the energy to be traded during the trading period changes with a change in weather forecast data that influences demand and a change in prediction data about states of power generation facilities and electric transmission and distribution facilities.

Furthermore, with the system of Patent Document 2, it is impossible to appropriately place an order for trading for which a quantity demanded is not defined yet at a timing of start of the trading period. Moreover, the system of Patent Document 2 gives no consideration to changes in the demand and the market condition of the energy to be traded influenced by climate and operating statuses of the power generation facilities and the electric transmission facilities; thus, it is impossible to place an order responding to the changes in the demand and the market condition in the light of such physical influences thereon.

Therefore, any of the techniques as background art has a problem that it is impossible to appropriately place an order related to trading in response to the demand that is unlikely to be defined during the trading period due to the climate influence and the influence of operation of the power generation facilities and the electric transmission facilities, to the exchange or the trade connection.

The present invention has been proposed to solve the problems of background art described above, and an object of the present invention is to provide a trading planning apparatus and a trading planning method capable of dynamically changing an order condition depending on a market trend, a demand fluctuation, and an operational status of a trade connection. The present invention makes it possible to determine orders to exchanges and trade connections different in delivery timing or in price determination period and to determine an order quantity and order timing for each trading while the demand and the market trend gradually become clear.

Means for Solving the Problems

(1) A trading planning apparatus according to the present invention includes an order quantity planning section including a trading position determination section receiving a trading cumulative quantity and estimated data about future quantities related to demand and a plurality of trade connections, and determining trading quantities with the plurality of trade connections.
Executing such a trading plan makes it possible to execute a plan of trading in response to constantly changing future quantities.
(2) The order quantity planning section of the trading planning apparatus according to (1) includes a data table in which positive and negative values can be taken as data related to each of a plurality of types of trading.
Executing such a trading plan makes it possible to simultaneously conduct sell trading and buy trading with respect to commodities having the same delivery period (delivery deadline or period for continuously providing a service). Preferably, buying energy delivered over a span of several hours in wholesale trading in response to peak load electricity supply and selling and providing a residual of the supply generated in time zones other than a peak load electricity supply time zone in wholesale trading makes it possible to accelerate the efficient use of energy.

(3) The trading planning apparatus according to the present invention includes a split-time-based split order planning section including a trading and ordering data determination section that generates trading and ordering data containing data about an order price (for example, a price of a buy bid or a price of a sell bid) or an order quantity related to trading and ordering in each of planned trading periods that are periods into which a trading period, during which trading can be conducted, is subdivided.

Executing such a trading plan makes it possible to execute a plan of efficient trading in each time section of the trading period.

(4) The trading planning apparatus according to the present invention includes a future quantity estimation section including a convergence estimation section estimating estimated quantities of data (for example, dispersion or likelihood values) related to errors in the future quantities estimated from actual record values.

Performing such future quantity estimation makes it possible to execute a plan of trading (for example, an order quantity plan and an order process time splitting plan) in response to a situation as to whether estimation accuracy of the future quantities is favorable or not favorable.

(5) The order quantity planning section of the trading planning apparatus according to the present invention includes the trading position determination section increasing or reducing the trading quantity of any of the trade connections (on the basis of an estimated value of a trading price or a tradable quantity with each of the trade connections) when a difference between a sum of the trading quantities of all of the trade connections and a future quantity demanded is equal to or greater than a predetermined value.

(6) Preferably, the trading position determination section increases a quota of trading with one certain trade connection in a case in which an estimated value of the trading price with the certain trade connection is lower than the trading price related to trading cumulation of all types of trading, and reduces the quota of the trading with the certain trade connection in a case in which the estimated value of the trading price with the certain trade connection is higher than the trading price related to the trading cumulation of all types of trading.

(7) More preferably, the trading position determination section reduces a trading quantity quota to any of the trade connections for which a value of data related to an error (dispersion or likelihood) in a trading price of each of the trade connections increases, and increases the trading quantity quota to any of the trade connections for which the data related to the error decreases.

Executing such a trading plan makes it possible to place an order that meets demand with economic rationality. Preferably, executing such a trading plan makes it possible to place an order for which a loss likely to be generated due to fluctuations in various future quantities is mitigated.

(8) The order quantity planning section of the trading planning apparatus according to the present invention includes a trading position determination section calculating a combination of trading on the basis of an efficient frontier calculated from expected returns by trading and a risk of the expected returns (for example, a value of dispersion of the expected returns), calculating a latter trading efficient frontier from data in a range in which future expected returns or a future expected return dispersion changes in a latter period of the trading period, and determining the combination of trading with the plurality of trade connections in such a manner that a portfolio (procurement and sales proportions of power generation and electricity commodities) in the vicinity of the efficient frontier can be changed to a portfolio in the vicinity of the latter efficient frontier.

Executing such a trading plan makes it possible to conduct trading throughout the trading period in a case in which it is predicted that estimation related to the future quantities (for example, an estimated quantity of a quantity demanded at appointed time on an appointed day at which supply is provided or of a marketing price of trading related to the time, or estimated quantities of dispersion values thereof (convergence estimated quantities)) differs between initial estimation and latter estimation, and in which a plan result, which is a target, changes from a result of an optimum trading plan at initial timing to a result of an optimum trading plan at latter timing.

More preferably, the trading planning apparatus according to the present invention defers order timing as evaluation values of the estimated values related to the future quantities in the time course of convergence are larger.

Executing such a trading plan makes it possible to conduct trading in accordance with a portfolio with the highest economic efficiency even in a case in which a change quantity of the latter efficient frontier is large.

(9) The trading planning apparatus according to the present invention includes the split-time-based split order planning section including the trading and ordering time splitting section that splits an order quantity to each of the trade connections into target values related to temporal transitions of an order during the trading period.

Executing such a trading plan makes it possible to execute a plan of trading that efficiently secures a quantity by which a sales business operator finally supplies commodities to customers by sequentially changing the order quantities to the trade connections even in a case in which the estimated values of the future quantities cannot be defined yet.

(10) Preferably, the trading planning apparatus according to the present invention includes a split-time-based split order planning section that increases or reduces a value of order data in each of the planned trading periods depending on a magnitude of an error (dispersion or likelihood) in future quantity estimation related to each planned trading period, with respect to orders in the planned trading periods into which the trading period is subdivided.

Executing such a trading plan makes it possible to preferentially execute trading with a minor error and to execute a trading plan that stably realizes a target trading quantity and target trading returns.

(11) Preferably, the trading planning apparatus according to the present invention includes the split-time-based split order planning section including a trading and ordering data determination section generating data about a target trading quantity in each of the planned trading periods at predetermined intervals generated on the basis of data about a target order transition (for example, data generated by splitting the trading period of commodities the trading period of which is 48 hours to 24 hours before time of delivery to set 10-minute planned trading periods, and setting a target value of the trading quantity to be completed in each of the trading periods), and creating the trading and ordering data containing a price obtained by performing weight addition between an estimated trading price and an estimated trading price error in response to a difference between the target trading quantity and a trading quantity actual record.

Determining such trading and ordering data makes it possible to execute a trading plan for completing trading of a necessary trading quantity.

For example, a bid price is determined by the present method when a procurement or sales quantity is to be secured with an eye on gate closure of the trading market. In a case of collecting the procurement quantity as a buyer, it is possible to determine the bid price in bidding based on the present method as follows. The bid price that enables a contract of the necessary quantity is determined on the basis of a statistical tendency that buy bidding at the bid price of a value $P + \sigma(P)$, where $P$ is an expected price and $\sigma$ is a dispersion thereof, can lead to a successful bid at a probability of 95% and that bidding at the bid price of a value $P - \sigma(P)$ can lead to a successful bid at a probability of 95%. More preferably, it is possible to appropriately change the bid price to a low value in the initial stage of trading in which a contracted quantity may be small, and to a high value such as the bid price $P + \sigma$ in a stage in which the trading quantity is necessary. Furthermore, in a case of a power generation seller, it is possible to appropriately change the bid price to a relatively high value at timing at which the contracted quantity may be small and to a relatively low value such as $P - \sigma$ with an aim of more successful bidding when the seller desires to completely sell power generated in accordance with a shutdown constraint on generators.

(12) The trading planning apparatus according to the present invention includes the trading and ordering data determination section generating data related to an amount of money of trading conducted in each of the planned trading periods at the predetermined intervals on the basis of the estimated data about the future quantities and creating the trading and ordering data.

Preferably, the trading planning apparatus according to the present invention includes a split-time-based split order planning section including the trading and ordering data determination section that generates the trading and ordering data from the data about the amount of money of the trading obtained by adding or subtracting a value, which is obtained by multiplying an estimated quantity of an error in estimated quantities of the future quantities by a coefficient, to or from the amount of money of the trading.

Such a trading plan makes it possible to execute a plan of trading that prevents an excessive payment amount by a trading cost leveling effect even in a case of generation of fluctuations in the future quantities (for example, a fluctuation in the trading price or a fluctuation in the quantity demanded) during the whole trading period.

More preferably, a plan is laid down such that a trading amount of money including an allowance for risk (value obtained by subtracting the value, which is obtained by multiplying the dispersion value $\rho$ by the coefficient, from an expected trading amount of money $Q$) is made uniform among the planned trading periods as the amount of money of the trading conducted in each of the planned trading periods at the predetermined intervals. Such a trading plan makes it possible to execute a trading plan such that an amount of money to be used is set high when errors in the estimated quantities of the price and the quantity of trading are minor and the trading amount of money is set low when the errors are significant (market risk is high), and to conduct efficient trading irrespective of the market risk.

(13) The trading planning apparatus according to the present invention includes the order quantity planning section that determines buy order quantities of commodities overlapping in time of delivery (supply time) (to result in cancellation of actual supply) and a trading position in a range of opposite position limitation to limit a sell order quantity.

Imposing such limitation on the order quantities makes it possible to plan trading that can meet the actual supply without an unlimited increase in the trading quantity.

For example, it is possible to determine arbitrage trading and appropriate quantities thereof in a case in which the trade connections or the trading markets differ. In a case of conducting the arbitrage trading such that at a time of occurrence of a state in which prices of equivalent electricity commodities (for example, electricity commodities that can be used to be supplied in the same time zone) take different values (two prices for one commodity) in different exchange markets, the electricity commodity is procured in the low price market and sold in the high price market, conducting the arbitrage trading without price ceilings disturbs business operation because of a financial loss realized when the predicted price is a miss. According to the trading planning of the present invention, it is possible to execute a plan of trading that enables the realized financial loss to fall in an allowable range.

For example, in trading (cross trading) of buying 4-hour block power generation and selling a commodity in a 30-minute spot or intraday market, a ceiling set on the opposite position is limited to prevent an increase in the trading quantity without price ceilings by the cross trading. For example, evaluation is performed using returns including an allowance for risk. Alternatively, a ceiling of a predetermined value is set, or a value obtained by multiplying actual supply by predetermined N is set as a trading ceiling.

(14) The trading planning apparatus according to the present invention includes the trading and ordering data determination section calculating a weighted addition value between data about a price (for example, closing price or weighted average cost of capital (WACC)) during the trading period and data related to convergence, comparing the calculated weighted addition value with a seller bid price in a market to determine a magnitude relationship, and generating the trading and ordering data.

Such a trading plan makes it possible to execute a plan of trading with overall rationality by prompt response to an offer (bid) of buying commodities needed by the other business operator urgently at a high price and power interchange of residual commodities at a low price via the market and with economic rationality for business operators in charge of trading.

Effects of the Invention

According to the present invention, it is possible to execute a trading plan in response to a market trend, a demand fluctuation, and an operational status of each trade connection, and to determine a quantity of an order to the trade connection and the market, and order timing as a result of execution of the trading plan.

Brief Description of the Drawings

FIG. 1 is a block diagram depicting a configuration of functions of an electricity trading planning apparatus according to a first embodiment of the present invention.

FIG. 2 is a configuration diagram of hardware according to the first embodiment of the present invention.

FIG. 3 is a sequence diagram according to the first embodiment of the present invention.

FIG. 4 is a linkage diagram depicting a linkage relationship among systems according to the first embodiment of the present invention.

FIG. 5 is a flowchart depicting processes according to the first embodiment of the present invention.

FIG. 6A is a diagram depicting an example of changing portfolios according to the first embodiment of the present invention.

FIG. 6B is a diagram depicting an example of changing the portfolios according to the first embodiment of the present invention.

FIG. 6C is a diagram depicting an example of changing the portfolios according to the first embodiment of the present invention.

FIG. 7 is a configuration diagram of a data table according to the first embodiment of the present invention.

FIG. 8 is a configuration diagram of a target order transition table according to the first embodiment of the present invention.

FIG. 9 is a configuration diagram of a target order transition table according to the first embodiment of the present invention.

FIGS. 10A to 10F are diagrams illustrating data temporal transition patterns according to the first embodiment of the present invention.

FIG. 11A is a diagram depicting patterns of future quantity transition candidates according to the first embodiment of the present invention.

FIG. 11B is a diagram depicting a frequency distribution of estimated quantities of a future quantity according to the first embodiment of the present invention.

FIG. 11C is a diagram depicting patterns of future quantity transition candidates according to the first embodiment of the present invention.

FIG. 11D is a diagram depicting a frequency distribution of estimated quantities of a future quantity according to the first embodiment of the present invention.

FIG. 12 is a diagram depicting a relationship between actual measured values of prediction transitions and an estimation result of predicted value transitions of dispersion values according to the first embodiment of the present invention.

FIGS. 13A and 13B are diagrams for comparing an order scheme according to the first embodiment of the present invention with a conventional order scheme.

FIGS. 14A and 14B are diagrams depicting a supply actual record and a returns result of a sales business operator according to the first embodiment of the present invention.

FIGS. 15A and 15B are diagrams depicting results of order transitions according to the first embodiment of the present invention.

Modes for Carrying Out the Invention

A plurality of embodiments of a trading planning system according to the present invention will be described hereinafter with reference to the drawings.

(First Embodiment)

[Configuration]

<<Functional configuration>>

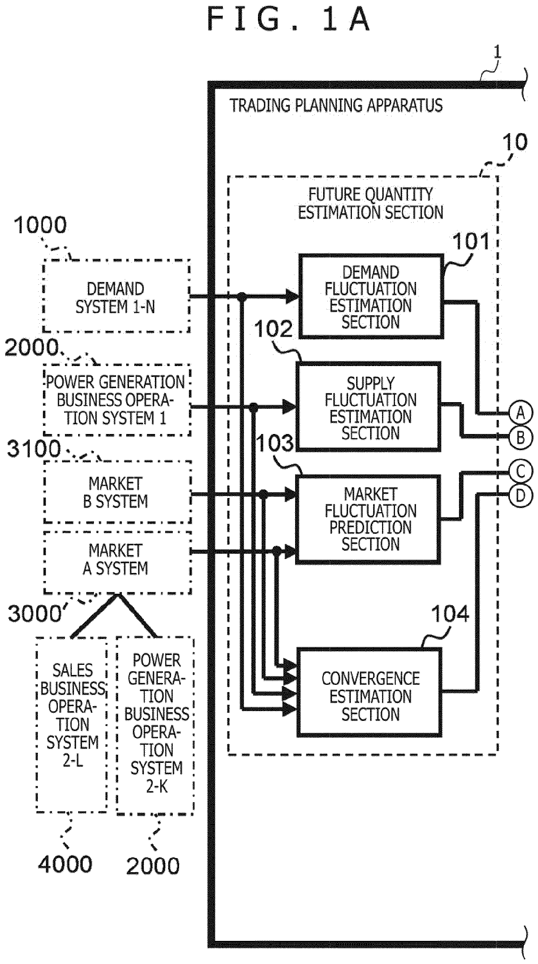

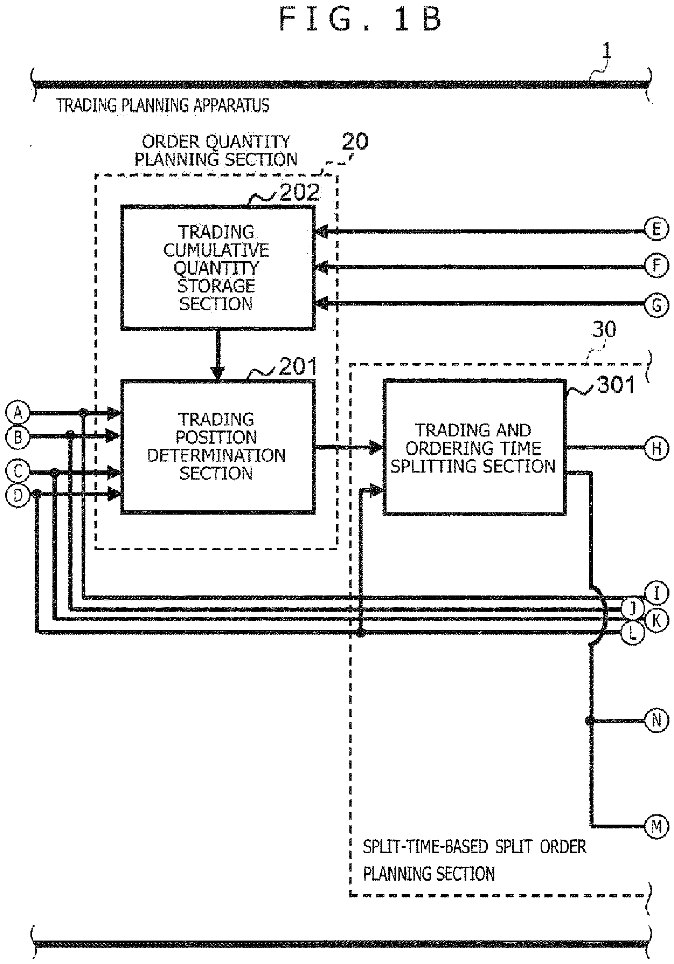

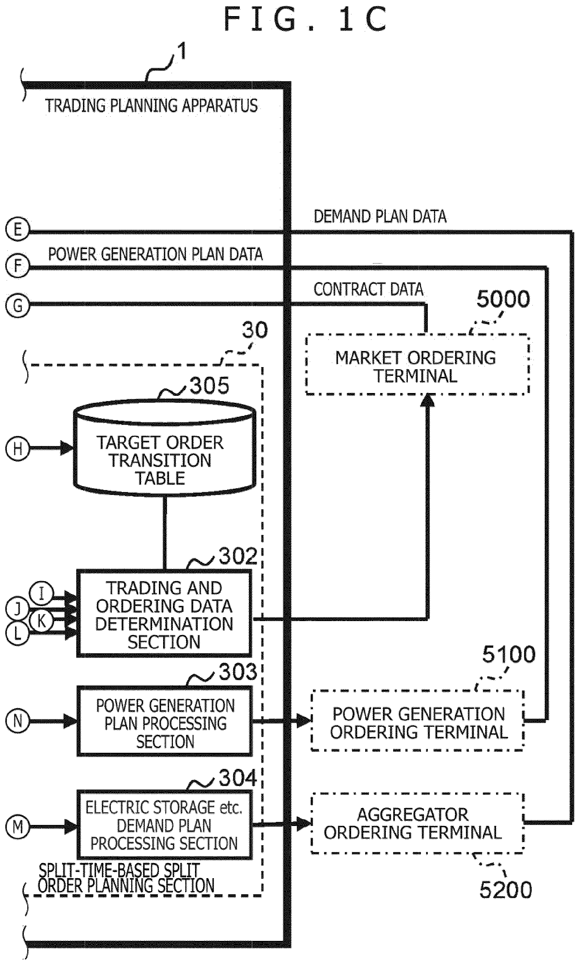

FIG. 1 is a block diagram depicting a configuration of functions of an electricity trading planning apparatus according to a first embodiment of the present invention. In FIG. 1, the trading planning apparatus 1, which is an apparatus belonging to a sales business operation system, includes a future quantity estimation section 10, an order quantity planning section 20, and a split-time-based split order planning section 30. The future quantity estimation section 10 includes a demand fluctuation estimation section 101, a supply fluctuation estimation section 102, a market fluctuation prediction section 103, and a convergence estimation section 104. The order quantity planning section 20 includes a trading position determination section 201 and a trading cumulative quantity storage section 202. The split-time-based split order planning section 30 includes a trading and ordering time splitting section 301, a trading and ordering data determination section 302, a power generation plan processing section 303, an electric storage etc. demand plan processing section 304, and a target order transition table 305.

The future quantity estimation section 10 acquires actual record data from a plurality of demand systems (1 to N) 1000, a power generation business operation system (1) 2000, a market A system (including sales business operation systems (2 to L) 4000 and power generation business operation systems (2 to K) 2000) 3000, and a market B system 3100, estimates future quantities related to demand and trade connections in each of the systems, and outputs estimated data to the order quantity planning section 20. In the present embodiment, in particular, the future quantity estimation section 10 includes the convergence estimation section 104 that estimates estimated quantities of data (for example, dispersion and likelihood values) related to errors in future quantities estimated from actual record values.

The order quantity planning section 20 includes the trading position determination section 201 receiving the estimated data about the future quantities related to the demand and the trade connections from the future quantity estimation section 10, determining trading quantities with a plurality of trade connections, and outputting determined contents to the split-time-based split order planning section 30, and the trading cumulative quantity storage section 202 storing a cumulative quantity of trading conducted so far on the basis of contract data from a market ordering terminal 5000, power generation plan data from a power generation ordering terminal 5100, and demand plan data from an aggregator ordering terminal 5200.

The split-time-based split order planning section 30 includes the trading and ordering time splitting section 301 generating planning-period-based data such as quantities of trading and ordering or amounts of money to be used in planned trading periods which are periods into which a trading period, during which trading can be conducted, is subdivided, a trading and ordering data determination section 302 generating order telegraphic messages (messages each containing data about a price and a quantity of a buy or sell order) to the markets or the trade connections, and that outputs the generated order telegraphic messages (order data) to the market ordering terminal 5000, a power generation plan processing section 303 that generates power generation plan data on the basis of the planning-period-based data generated by the trading and ordering time splitting section 301 and outputting the generated power generation plan data to the power generation ordering terminal 5100, the electric storage etc. demand plan processing section 304 generating demand plan data on the basis of the planning-period-based data generated by the trading and ordering time splitting section 301 and outputting the generated demand plan data to the aggregator ordering terminal 5200, and the target order transition table 305 storing the planning-period-based data generated by the trading and ordering time splitting section 301.

<<Hardware configuration>>

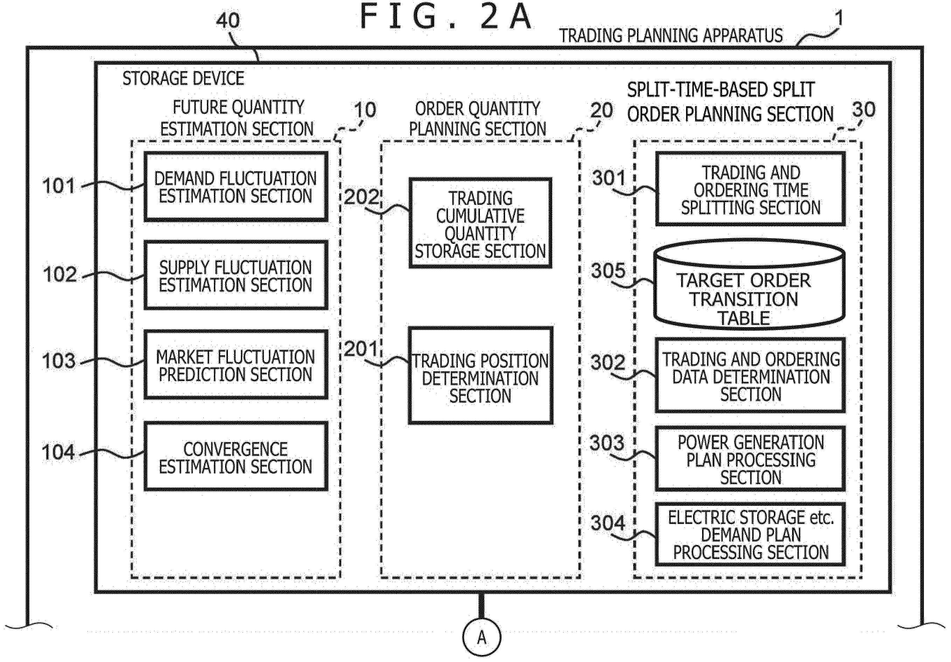

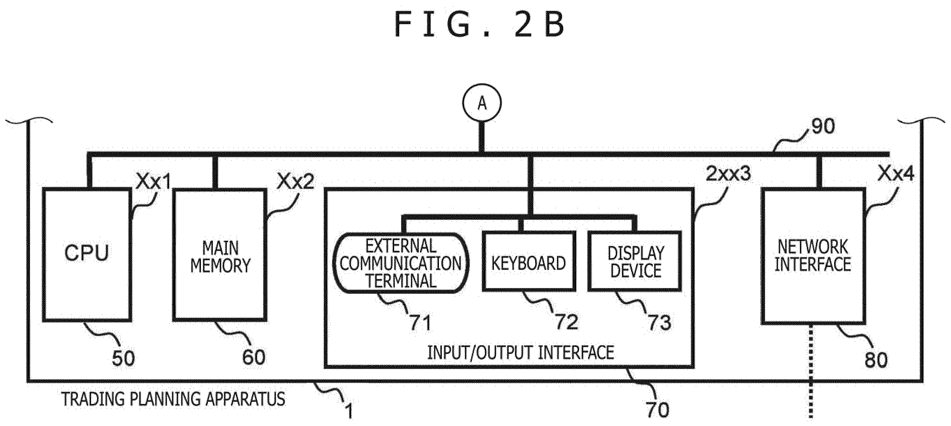

FIG. 2 is a hardware configuration diagram of the trading planning apparatus 1. In FIG. 2, the trading planning apparatus 1 further includes a storage device 40 that records programs and data realizing the functions of each of the future quantity estimation section 10, the order quantity planning section 20, and the split-time-based split order planning section 30, a central processing unit (CPU) 50, a main memory 60, an input/output interface 70, and a network interface 80, and the sections are connected to a bus 90. The input/output interface 70 includes an external communication terminal 71, a keyboard 72, and a display device 73. The network interface 80 is connected to the external systems (the demand systems 1000, the power generation business operation systems 2000, and the like) and the ordering terminals such as the market ordering terminal 5000, the power generation ordering terminal 5100, and the aggregator ordering terminal 5200.

<<Sequence diagram of trading process>>

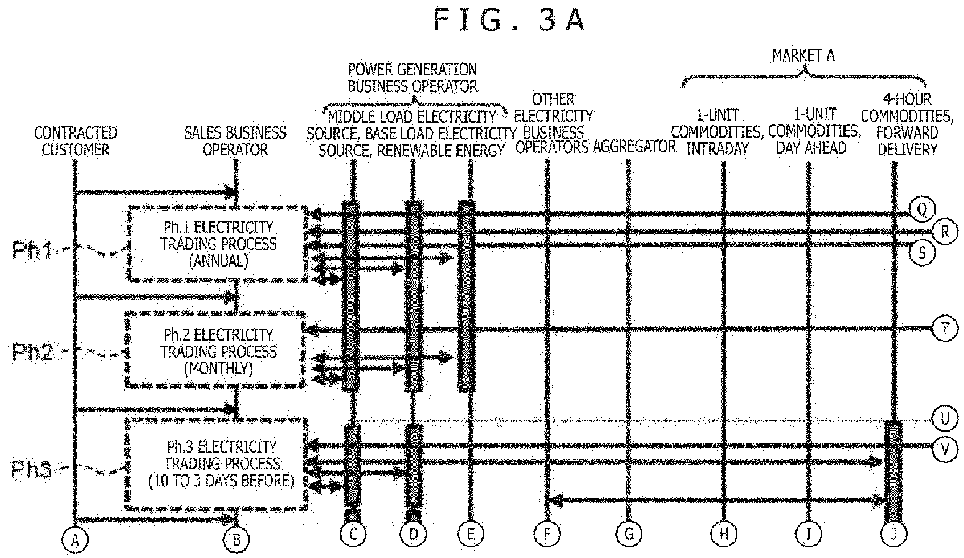

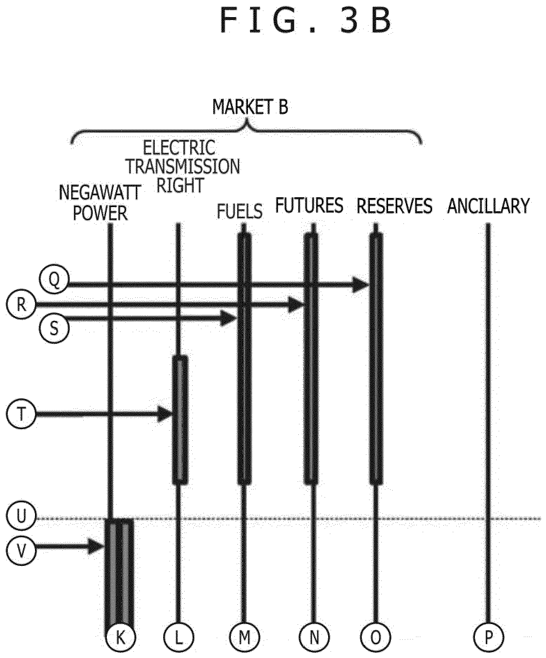

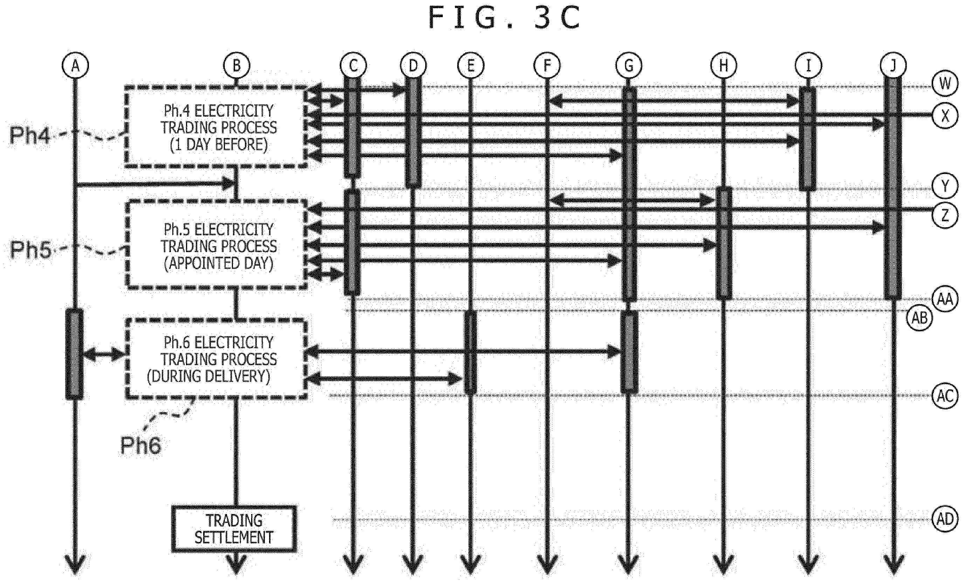

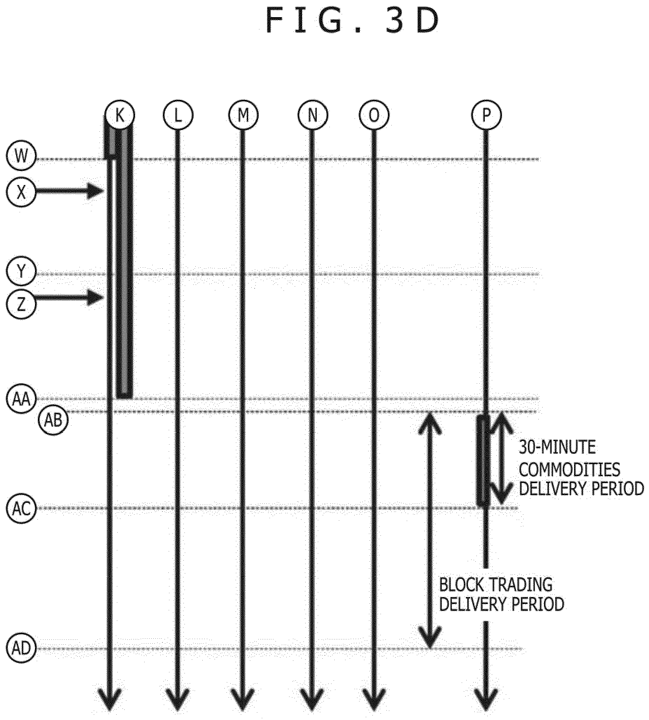

FIG. 3 is a sequence diagram depicting electricity trading processes (phases Ph1 to Ph6) including a trading planning process performed by the trading planning apparatus in the present embodiment and processes performed by the other systems transmitting and receiving input/output data about the trading process.
In FIG. 3, a sales business operator executes the phases (electricity trading processes) Ph1 to Ph6 (Ph.1 to Ph.6) using the trading planning apparatus 1. First, the trading planning apparatus 1 executes the phase Ph1 annually on the basis of information about fuels, futures, reserves, and an electric transmission right in the market B (market B system), and information about middle load electricity sources, base load electricity sources, and renewable energy (renewable energy) in power generation business operators, and executes the phase Ph2 monthly on the basis of the information about the electric transmission right in the market B and the information about the middle load electricity source, the base load electricity source, and the renewable energy in the power generation business operators. Next, the trading planning apparatus 1 executes the phase Ph3 ten to three days before on the basis of information about negawatt power in the market B, information about a forward delivery of 4-hour commodities in the market A, and the information about the middle load electricity sources and the base load electricity sources in the power generation business operators, and executes the phase Ph4 on a previous day on the basis of information about a day-ahead delivery of one-unit commodities and the forward delivery of 4-hour commodities, information about an aggregator, and the middle load electricity sources and the base load electricity sources in the power generation business operators. Next, the trading planning apparatus 1 executes the phase Ph5 on an appointed day on the basis of the information about the negawatt power in the market B, the information about the intraday delivery of one-unit commodities and the forward delivery of 4-hour commodities, the information about the aggregator, and the middle load electricity sources in the power generation business operators, executes the phase Ph6 during delivery on the basis of the information about the aggregator and the information about the renewable energy in the power generation business operators, transmits process results to contracted customers, and then executes a trading settlement process. It is noted that in the phase Ph6, a delivery period of 30-minute commodities in an ancillary service corresponds to "during delivery." Furthermore, a period up to the trading settlement process that involves the delivery period of 30-minute commodities corresponds to a "block trading delivery period."

<<System linkage diagram>>

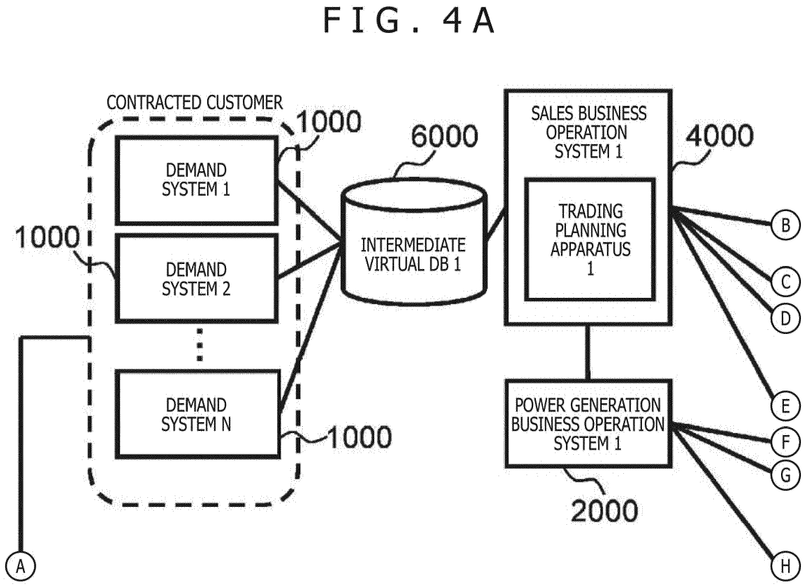

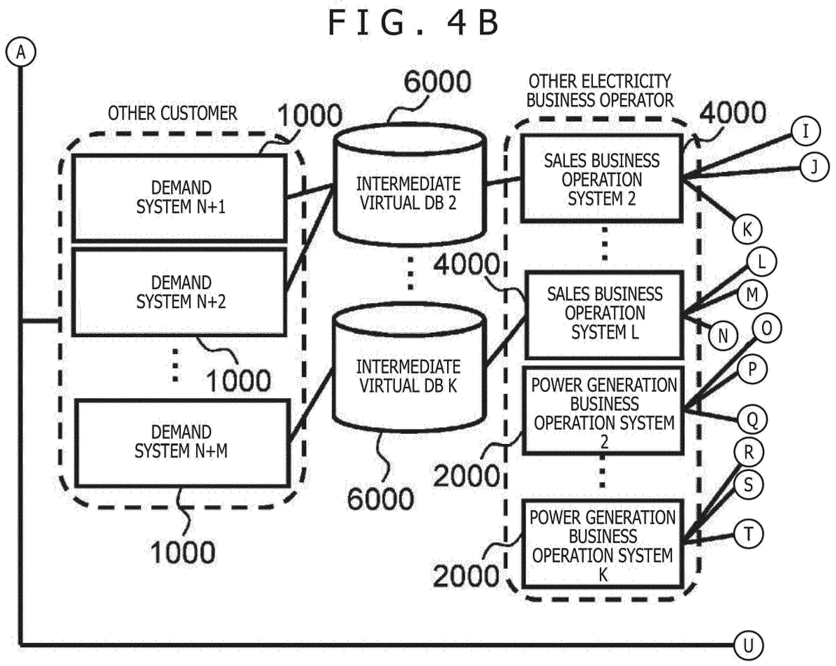

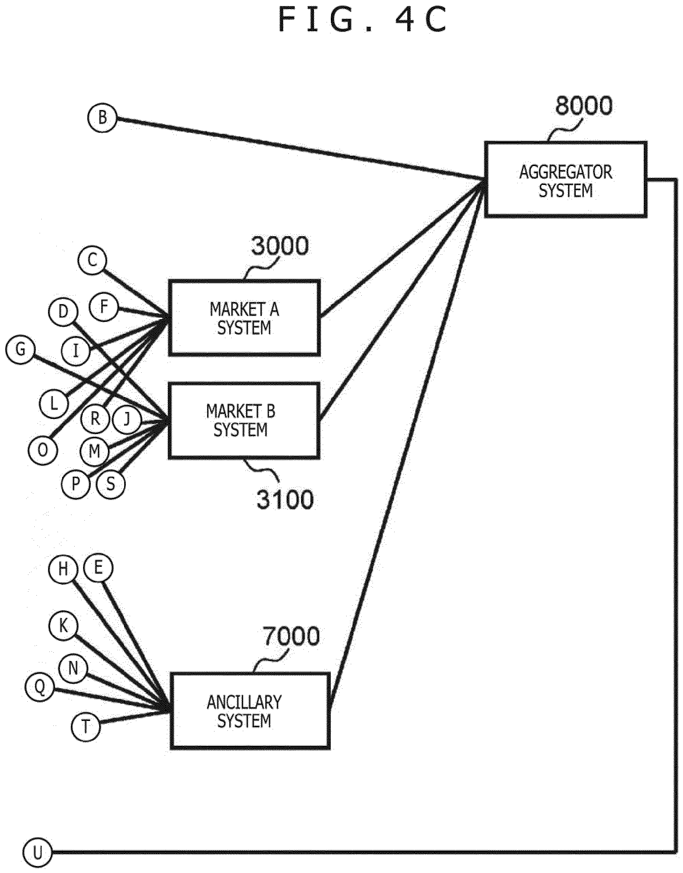

FIG. 4 is a linkage diagram depicting a linkage relationship among the systems according to the present embodiment. In FIG. 4, the system according to the present embodiment includes the plurality of demand systems (1 to N) 1000 belonging to the contracted customers, a plurality of demand systems (N+1 to N+M) 1000 belonging to other customers, the sales business operation system (1) 4000, the power generation business operation system (1) 2000, the plurality of sales business operation systems (2 to L) 4000 belonging to other electricity business operators, the plurality of power generation business operation systems (2 to K) 2000 belonging to the other electricity business operators, the market A system 3000, the market B system 3100, an ancillary system 7000, and an aggregator system 8000, and the systems are connected via a network. The sales business operation system 4000 used by each electricity sales business operator includes the trading planning apparatus 1. This sales business operation system 4000 receives data from the demand systems 1000 via an intermediate virtual database (virtual database) 6000 for intermediation of data managed by transmission and distribution business operators. Furthermore, the sales business operation system 4000 acquires data related to supply (data about a possible thermal power generation amount and a thermal power controllable amount and data about power generation situations of photovoltaic and wind power renewable energy) from the power generation business operation system 2000 of a power generation business operator conducting relative trading with the sales business operator. Moreover, the sales business operation system 4000 transmits and receives data related to each of the markets to and from the market A system 3000 and the market B system 3100, and transmits and receives data related to orders placed and orders taken to and from the aggregator system 8000 in charge of demand response.

<<Flowchart>>

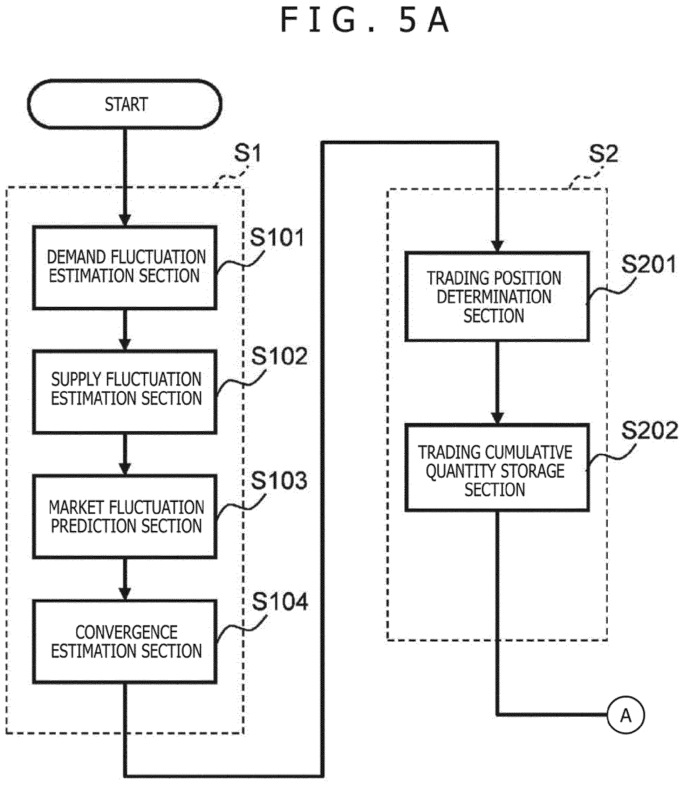

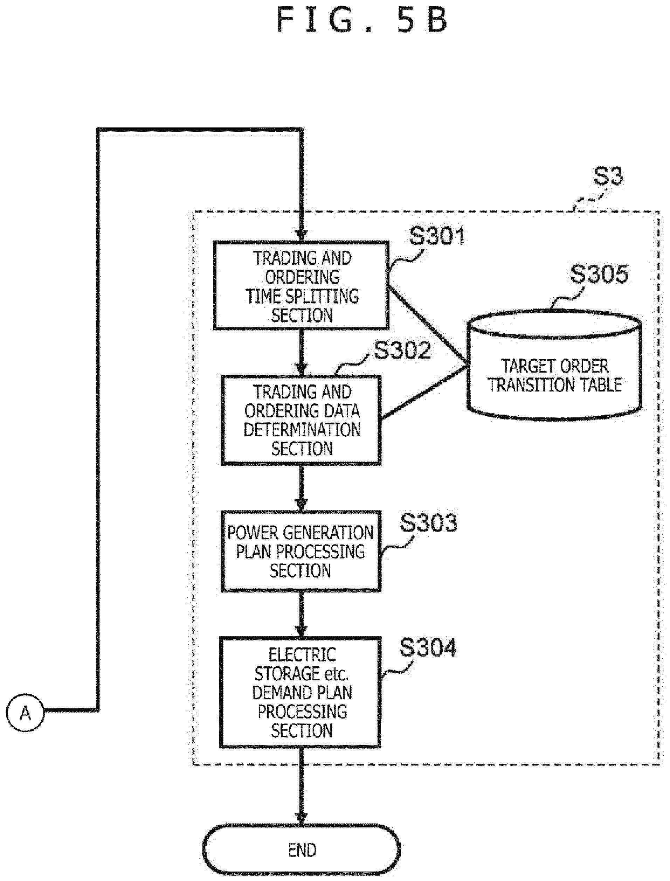

FIG. 5 is a flowchart of overall processes performed by the trading planning apparatus according to the present embodiment. In FIG. 5, the future quantity estimation section 10 estimates various future quantities (Step S1), the order quantity planning section 20 plans an order quantity from estimation results of the future quantity estimation section 10 (Step S2), and the split-time-based split order planning section 30 plans a split-time-based split order on the basis of the plan of the order quantity and transmits order data to the markets and the trade connections on the basis of a planning result (Step S3). Details of the processes performed by the sections will be described below.

[Process performed by future quantity estimation section 10]

(Step S101) The demand fluctuation estimation section 101 estimates a future quantity demanded of electricity consumed by the customers to which the electricity is supplied. In this example, the demand fluctuation estimation section 101 splits a future period into 30-minute periods, and estimates the quantity demanded in each of the periods. The demand fluctuation estimation section 101 estimates the future quantity demanded on the basis of actual record data about past demand. For example, the demand fluctuation estimation section 101 may select a demand curve of similar demanded days similar in day of week, calendar day, and weather data, generate a multiple regression prediction model of a daytime maximum, daytime minimum, daytime average, or maximal/minimal quantity demanded from the weather data, predict a daytime maximum, daytime minimum, daytime average, or maximal/minimal quantity demanded from weather forecast data, and correct the demand curve so as to predict the future quantity demanded. Alternatively, the demand fluctuation estimation section 101 may use past demand temporal fluctuations as time series data and perform time series prediction using an autoregression model.

(Step S102) The supply fluctuation estimation section 102 estimates a future quantity of data related to power generation of the power generation business operator who supplies at wholesale the sales business operator with electricity which is supplied to the customers by the sales business operator. The present process includes a process for estimating a future quantity of a quantity supplied of photovoltaic power generation and wind power generation renewable energy. The supply fluctuation estimation section 102 estimates the future quantity of the quantity supplied on the basis of actual record data about past power generation. For example, the supply fluctuation estimation section 102 may select a power generation curve of similar demanded days similar in weather data, generate a multiple regression prediction model of daytime maximum, daytime minimum, daytime average, or maximal/minimal electricity generated from the weather data, predict daytime maximum, daytime minimum, daytime average, or maximal/minimal electricity generated from the weather forecast data, and correct the power generation curve so as to predict the future quantity of the quantity supplied. Alternatively, the supply fluctuation estimation section 102 may use past power generation temporal fluctuations as time series data and perform time series prediction using an autoregression model.

Preferably, the process performed by the supply fluctuation estimation section 102 according to the present embodiment includes a process for estimating future quantities of thermal power generation and pumped storage generation controllable quantities (electricity generated that can be increased and electricity generated that can be reduced within 30 minutes by issuing a control request) as data related to power generation data.

(Step S103) The market fluctuation prediction section 103 estimates future quantities of data about a market price, the number of bids, and bid electric energy in a wholesale market where the sales business operator procures the electricity to be supplied to the customers (these pieces of data are handled as continuous quantities or quantities of discrete values). The market fluctuation prediction section 103 estimates the future quantities of the data on the basis of past market data. For example, the market fluctuation prediction section 103 may select a price curve, a bid quantity curve, and a bid electric energy curve of similar days similar in data about a day of week, a calendar day, weather, an expected quantity demanded, and a capacity of generators in planned non-operation, generate a multiple regression prediction model related to a daytime maximum, daytime minimum, daytime average, or maximal/minimal value of each of the curves, calculate a multiple regression model of each of the curves on the basis of expectation data about the day of week, the calendar day, the weather, the expected quantity demanded, and the capacity of the generators in planned non-operation, and correct the respective curves so as to predict the future quantities of the data. Alternatively, the market fluctuation prediction section 103 may use past data temporal fluctuations as time series data and perform time series prediction using autoregression models.

Furthermore, the market fluctuation prediction section 103 according to the present embodiment preferably includes an estimation section that estimates future quantities of free capacities of electric transmission lines related to transmission of electricity procured from power plants, an estimation section that estimates future quantities of a price and a quantity of a reserve-related power generation right (reserve market trading) bought by the electric transmission business operator, an estimation section that estimates a future quantity of a price of the ancillary service (service for replenishing a difference between the electricity generated and the quantity demanded) for solving an imbalance by the electric transmission business operator, an estimation section that estimates a future quantity of negawatt power trading, and an estimation section that estimates future quantities of fuels (marketing prices and futures trading prices of liquefied natural gas (LNG) and crude oil), and performs processes for estimating these future quantities. It is thereby possible to lay down a trading plan including an electric transmission reservation right, provision of the power generation right to a reserve, use of the ancillary service, and the use of the negawatt power.

(Step S104) The convergence estimation section 104 estimates transitions of errors for the estimated quantities of the future quantities. In this example, the convergence estimation section 104 splits the future period into the 30-minute periods, and estimates errors in the estimated quantities in each of the periods. The convergence estimation section 104 estimates the errors on the basis of past actual record data. For example, the convergence estimation section 104 uses past actual record data temporal fluctuations as time series data and performs time series prediction using a dispersion autoregression model.

Preferably, the convergence estimation section 104 may subdivide the past actual record data into pieces of data at intervals of predetermined periods (for example, intervals of 24 hours, 48 hours, or one week), perform fast Fourier transform or wavelet transform on each of the subdivided pieces of data to classify resultant pieces of data by a period similar in feature amount as a periodic fluctuation, and extract a periodic fluctuation pattern of each of groups into which the piece of data is classified (calculate an average value of feature amounts by inverse transform). In addition, the convergence estimation section 104 may generate an identification tree for identifying conditions (attributes) for generating the patterns from attributes (the day of week, the calendar day, temperature, sunshine, other weather data, the number of generators in planned shutdown, the free electric transmission capacities, a demand predicted value, and the like) common to each of the groups into which the piece of data is classified using an identification algorithm such as CART (Classification and Regression Trees) or ID3 (Iterative Dichotomiser 3), estimate a plurality of pattern candidates to be generated in the future period from the identification tree, and combine the estimated patterns to obtain a frequency distribution of the future quantities to be generated. It is thereby possible to appropriately estimate the future quantities including an irregular fluctuation called, for example, a market price spike, and to lay down a trading plan in the light of occurrence of the spike (trading plan in the light of a change in the efficient frontier because of the presence of the spike).

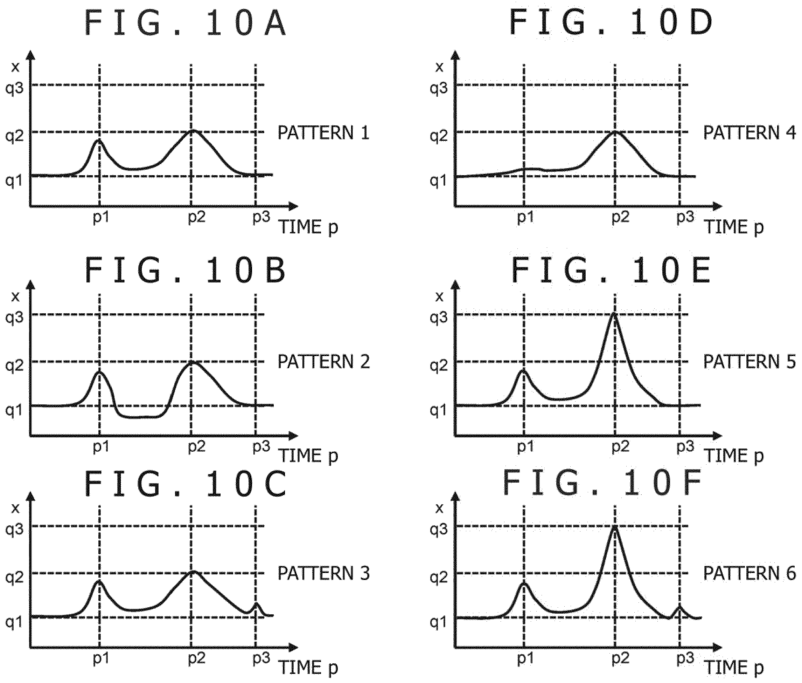

FIGS. 10A to 10F depict extraction examples of patterns 1 to 6 of future quantity temporal transitions in the predetermined period obtained as described above.

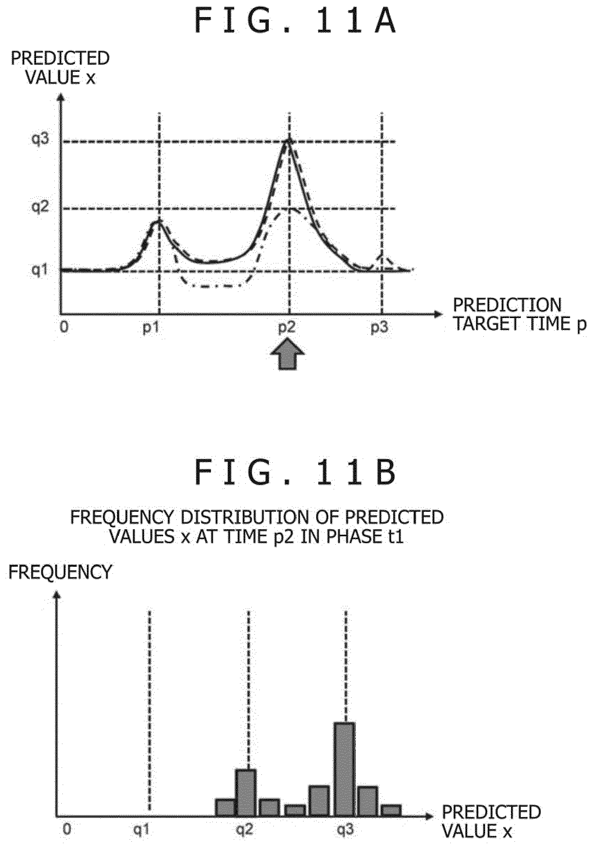

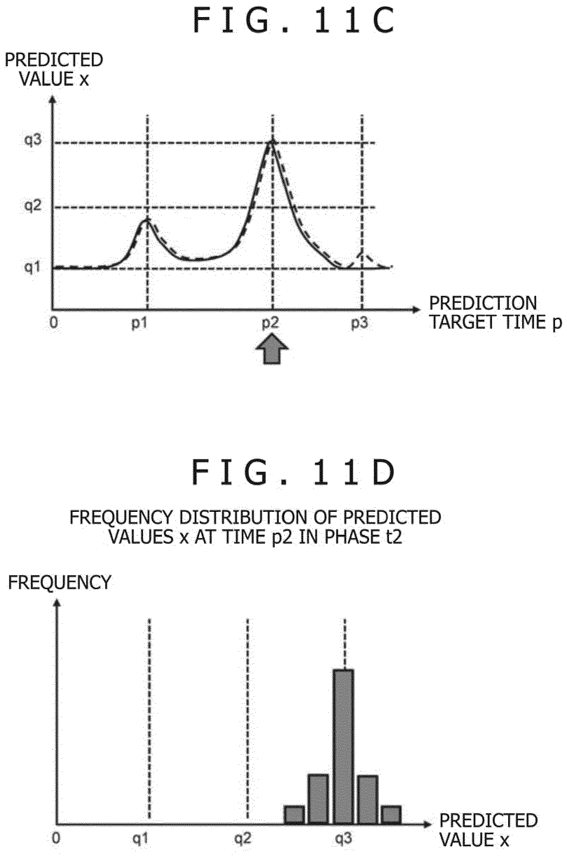

FIG. 11A is a diagram of transition candidate patterns of the future quantity (which is, for example, the quantity demanded herein) during certain future periods 0 to p3 (for example, 0:00 to 24:00 of July 3) plotted at time t contained in the Phase (electricity trading process) Ph2 in the sequence of FIG. 3. Three patterns are output as candidates. FIG. 11B depicts a frequency distribution of estimated quantities (predicted quantities) of the future quantities at future point in time p2 of FIG. 11A from information about a likelihood (selection rate in the identification tree) by which each of the candidate patterns of FIG. 11A is selected and the candidate patterns (or past actual measurement data serving as samples of generating the candidate patterns). FIG. 11C is a diagram of transition candidate patterns of the future quantity (which is, for example, the quantity demanded herein) during the same future periods (0:00 to 24:00 of July 3) plotted at time t2 in the Phase (electricity trading process) Ph4 in the sequence of FIG. 3. Two patterns are output as candidates. FIG. 11D similarly depicts a frequency distribution of estimated quantities (predicted quantities) of the future quantities at the future point in time p2 of FIG. 11C from information about a likelihood (selection rate in the identification tree) by which each of the candidate patterns of FIG. 11C is selected and the candidate patterns (or past actual measurement data serving as samples of generating the candidate patterns).

It is assumed herein that a prediction error is reduced (a tail of the frequency distribution is made narrower to increase the likelihood) by the advancement of estimation execution timing from the time t1 in the phase Ph2 to the time t2 in the phase Ph3.

It is more preferable in the present embodiment to use values of the errors (dispersion values or likelihoods) as time series data and to predict a change (convergence) in the values.

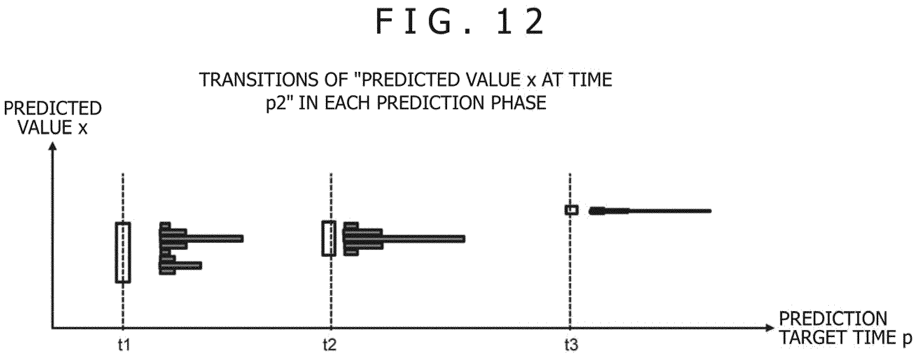

FIG. 12 is a diagram depicting an example of actual measured values of the prediction transitions (exemplarily depicted in an angle frequency distribution) and a value of an estimation result of a transition in the predicted value of the dispersion value (estimated value in the dispersion autoregression model) (exemplarily depicted by a box chart) in each phase for estimating (predicting) the future quantities. In the present embodiment, the transition of a predicted value x at the time p2 in each prediction phase is depicted.

[Process performed by order quantity planning section 20]

In a process performed by the order quantity planning section 20 in Steps S201 and S202, the order quantity planning section 20 determines an order quantity, order destinations, and types of order commodities for electricity procurement necessary to supply electricity from data about the estimated values of data related to the demand, the markets, and various types of power generation (thermal power generation, hydro power generation, and photovoltaic power generation) operated by the sales business operator under relative contracts and data about the errors (dispersions and likelihoods) in the estimated values. Details of the process performed by the order quantity planning section 20 will next be described.

(Step S201) The trading position determination section 201 performs a process for determining a trading position that indicate values of trading quantities (quantities of orders placed or quantities of orders taken) with respect to the trade connections per 30-minute delivery time from the trading cumulative quantity and the estimated data about the future quantities related to the demand and the trade connections (the power generation business operators in charge of wholesale supply, the other business operators in charge of wholesale procurement, and the markets). The trading position determination section 201 determines the trading position from a portfolio that indicates planned allocation values of operation funds.

The portfolio indicates proportions of the operation funds allocated to a plurality of risk-free assets and risk assets. In the present embodiment, the trading position determination section 201 plans a portfolio with the electricity generated under an agreement reached with trade connection power plants and electricity commodities traded in the markets. The efficient frontier (which is the efficient and best portfolio and also referred to as "efficient frontier") means herein a feasible portfolio, which satisfies three conditions that (1) the portfolio is feasible satisfying constraints on the quantity supplied such as capacities of the generators and physical constraints in operational constraints such as startup time, shutdown time, minimum shutdown time, and minimum operation time, (2) the portfolio has a maximum evaluation value of an amount of periodic returns with the same risk value, and (3) an obtained amount of periodic returns is equal to or higher than an amount of periodic returns of a portfolio having a lower evaluation value of the risk.

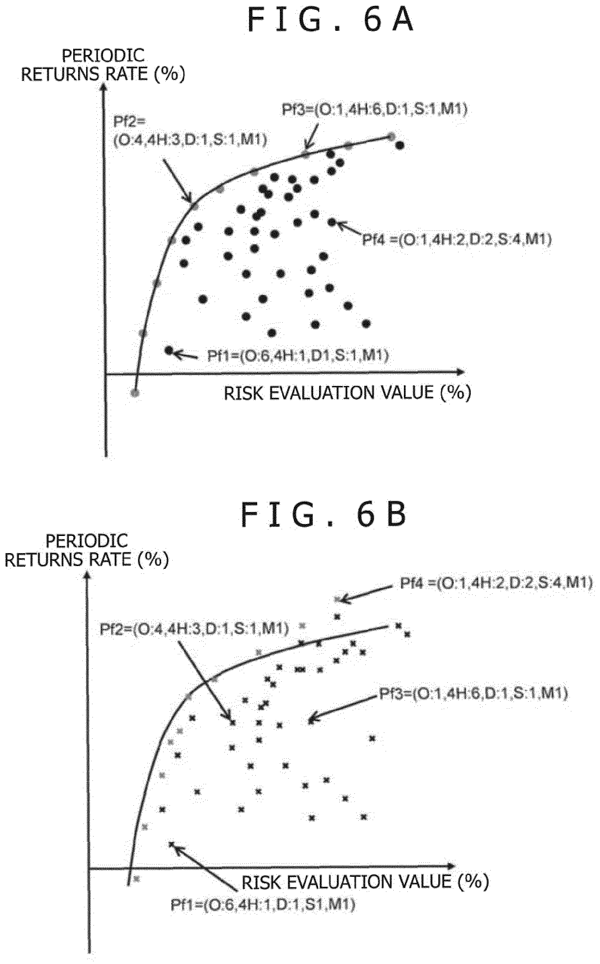

FIG. 6A is a graph related to each evaluation value in the feasible portfolio in a first half (ten days before delivery) of the phase Ph2. In the graph, a vertical axis represents a return evaluation value by a trading execution simulation according to the portfolio, and a horizontal axis represents a value of a VaR (value at risk) of returns in the simulation. Performing a Monte Carlo simulation as the simulation for the feasible portfolio makes it possible to obtain an evaluation value. Pf1, Pf2, Pf3, and Pf4 in FIG. 6A denote portfolios having different trading commodity configurations (power generation configurations).

It is assumed that a return evaluation period in the present embodiment is one week including a day of delivery of electricity to the customers, and portfolios that satisfy a feasible solution within the physical constraints (feasible solution to a generator startup/shutdown plan and output power allocation of one week) are evaluated.

The Pf1 denotes one portfolio that holds proportions of electricity by the contract generators in a total quantity supplied per day, 4-hour block electricity, 30-minute electricity by day-ahead trading, 30-minute electricity by intraday trading, and an operation reserve fund as 6:1:1:1:1 in the feasible solution obtained as trading per 30-minute unit. Likewise, the Pf2 allocates the operation funds per day thereto at proportions of 4:3:1:1:1, the Pf3 allocates the operation funds per day thereto at proportions of 1:6:1:1:1, and the Pf4 allocates the operation funds per day thereto at proportions of 1:2:2:4:1.

It is noted that the portfolio may hold data as allocation proportions related to power generation, power selling, and power purchase in the supply kWh as an alternative to the present embodiment.

In an example of FIG. 6A described above, the Pf2 and Pf3 are portfolios satisfying a condition for the efficient frontier in the evaluation in the phase Ph2. An evaluation result is output from the input/output interface 70, and the trading position determination section 201 receives a selection instruction to determine any of the portfolios on the basis of which a planning process proceeds.

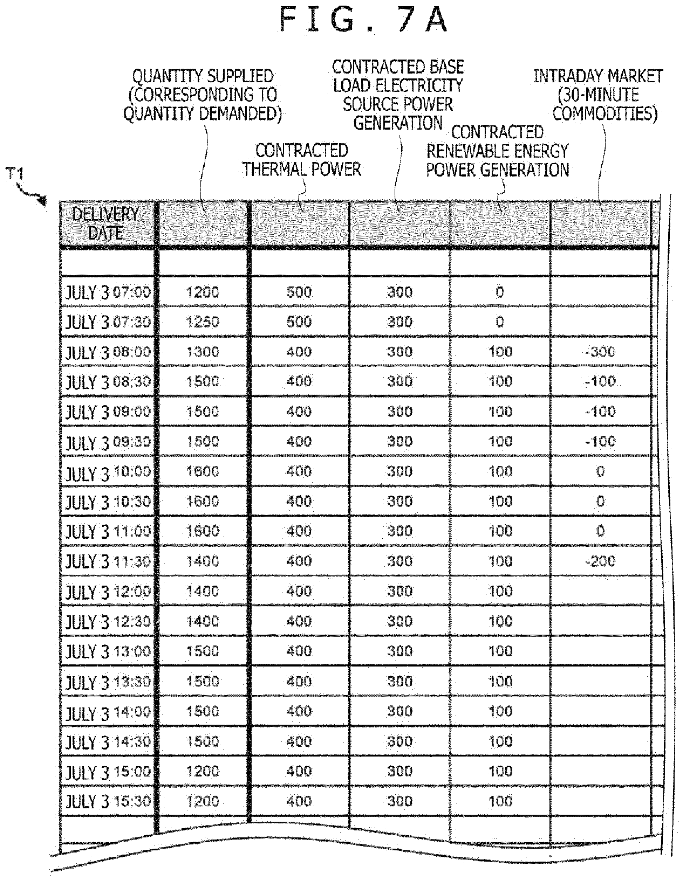

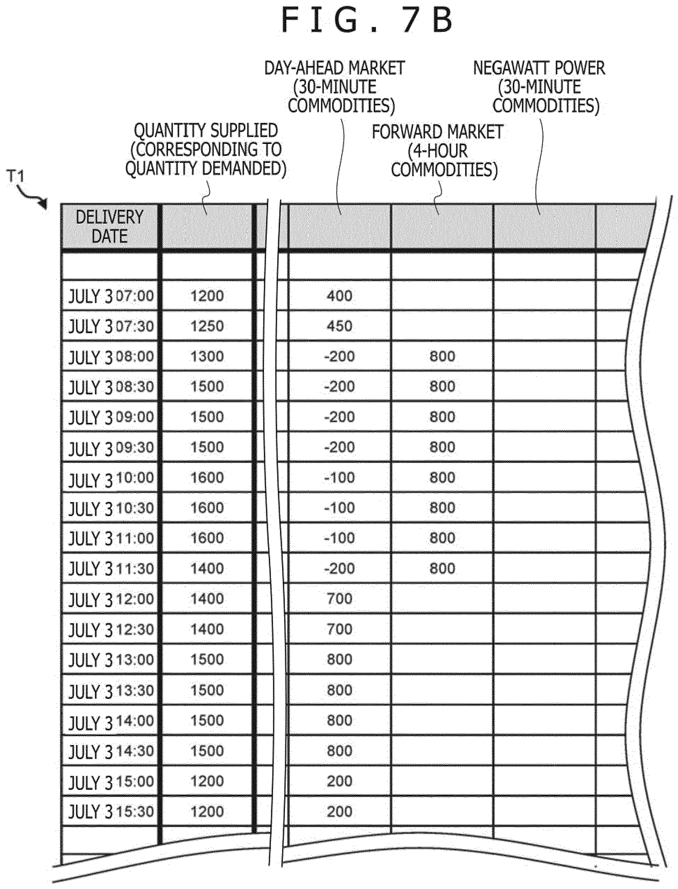

The trading position determination section 201 calls the trading position per 30 minutes that realizes the portfolio which the trading position determination section 201 is instructed to select from the simulation result described above, and stores the trading position in a data table T1 of FIG. 7. An example of the data table T1 depicts a result of a plan to purchase a 4-hour block commodity at wholesale and to sell 30-minute-unit commodities at wholesale. It is noted that a quantity sold at wholesale is stored as a negative value.

In the present embodiment, a simulation is performed with the position including the evaluation values as negative values. This signifies that sell bidding is conducted in the market. In the example of the data table T1 of FIG. 7, in relation to the delivery starting at 8:00 and ending at 12:00 (a unit starting at 11:30), the demand surpasses kW obtained by planned power generation shared among the contract power plants and by the procurement of the 4-hour block; thus, the example of the data table T1 of FIG. 7 depicts the result of the plan to sell the electricity at wholesale in a day-ahead market and an intraday market as 30-minute electricity commodities. The trading position determination section 201 outputs the trading position per 30 minutes determined in this way (end of Step S201).

(Step S202) The trading cumulative quantity storage section 202 receives and records trading cumulative data contracted in the markets and data about a plan agreement result with the power generation business operators that are the trade connections and an aggregator business operator supplying the negawatt power, with respect to the trading position. A recording result is output to a user through the input/output interface 70.

The description given so far is the process performed by the order quantity planning section 20. As a result of this process, a target value of the electricity generated procured from the trade connections for supply time is determined per delivery time zone (per delivery unit) as data with a tag identifying the types of commodities, the trade connections, and the types of power generation.

[Re-processing of process performed by order quantity planning section 20 by repeated execution in phases]

In the present embodiment, Steps S201 and S202 are repeatedly executed in the Phases Ph1 to Ph6 depicted in FIG. 3 (and also executed in one phase at predetermined intervals (for example, intervals of two hours)). It is thereby possible to lay down a trading plan with the markets and the trade connections in and with which a plurality of types of trading having different trading periods are conducted, and a trading plan responding to changes in the demand and the statuses of the trade connections on the basis of the data about an actual situation of the demand, a market condition, and operating statuses of the generators to be made gradually clear.

For example, by executing the process (Step S201) in the phase Ph3, a portfolio of FIG. 6B is calculated similarly to Step S201 described above on the basis of newly received data, differently from the evaluation of the portfolios in the phase Ph2 described above (described with reference to FIG. 6A described above).

At this time, in Step S201, the process is not changed in a case in which the efficient frontier for which the portfolio is to be selected matches the efficient frontier at previous execution time. In a case in which the efficient frontier differs from that at the previous execution time (for example, the efficient frontier differs between FIGS. 6A and 6B), a process for changing portfolio selection is characteristically performed.

In an example depicted in FIG. 6B of the present embodiment, four days before the delivery in the phase Ph3, data about the weather forecast on the appointed day of delivery changes from "cloudy" to "clear but occasionally cloudy and high wind velocity."

"A reduction in the market price resulting from an increase in the supply of the photovoltaic renewable energy and an increase in sell bidding of the thermal power generation by the power generation business operators that have had extra supply capabilities in a 30-minute commodity intraday market, and an increase in the dispersion value of the market price due to an increase in bidding of the renewable energy power generation highly dependent on the weather occur"; thus, changes in the estimated values of market-related future quantities occur. The portfolio that satisfies the condition as a portfolio on the efficient frontier is the Pf4 described above on the basis of new market-related estimated quantities.

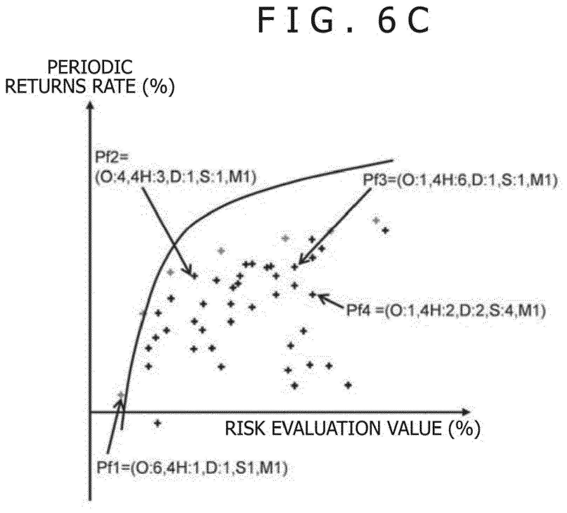

Furthermore, in an example depicted in FIG. 6C of the present embodiment, four days before the delivery in the Phase Ph3, the data about the weather forecast on the appointed day of delivery changes from "cloudy" to "rain" (high middle cloud cover)."

The estimated values of the future quantities are updated being reflective of "an increase in the market price resulting from a reduction in the supply of the photovoltaic renewable energy and a reduction in the sell bidding by the power generation business operators that have reduced supply capabilities in the 30-minute spot or intraday market, and further, an increase in the dispersion value of the market price resulting from an increase in the frequency of occurrence of market segmentation caused by an increase in the bias of power generation locations and thereby occurrence of confusion of a power flow and an open position average up phenomenon in the wholesale market."

The portfolio that satisfies the condition as the portfolio on the efficient frontier is the Pf1 described above on the basis of new market-related estimated quantities.

In the preferred embodiment of the present invention, a portfolio evaluation result is output as current and future evaluation values of the portfolio estimated from error estimated data in convergence estimation. Furthermore, an efficient frontier simulation result at each time (and in each phase of FIG. 3) may be output.

In outputting from the input/output interface for selection of the portfolio, current evaluation of the portfolio (power generation configuration proportions and electricity commodity procurement configuration proportions) and evaluation of the portfolio generated in a future phase (expected occurrence of the efficient frontier in FIG. 6B or 6C due to a weather change from the efficient frontier of FIG. 6A) are output. As a result, it is indicated that the evaluation of the phase Ph6 in which the proportion of the allocation of the operation funds to the forward delivery electricity is six on the basis of the weather data caused by the estimated weather change is that returns are lower; thus, the user is alerted.

Preferably in Step S201 in the present embodiment, the trading position determination section 201 increases or reduces the trading quantity of any of the trade connections when a difference between a sum of the trading quantities with all the trade connections and a future quantity demanded is equal to or greater than a predetermined value.

Furthermore, the trading position determination section 201 performs an update process for increasing a quota of trading with one certain trade connection in a case in which an estimated value of a trading price with the certain trade connection is lower than a trading price related to trading cumulation of all types of trading, and for reducing the quota of trading with the certain trade connection in a case in which the estimated value of the trading price with the certain trade connection is higher than the trading price related to trading cumulation of all trades.

Furthermore, the trading position determination section 201 performs an update process for reducing a trading quantity quota to any of the trade connections for which a value of data related to an error in the trading price of each of the trade connections increases, and for increasing the trading quantity quota to any of the trade connections for which the data related to the error decreases.

Moreover, the trading position determination section 201 calculates a combination of trading on the basis of the efficient frontier calculated from expected returns by trading and a risk of the expected returns, calculates a latter trading efficient frontier from data in a range in which future expected returns or future expected return dispersion changes in a latter period of the trading period, and determines the combination of trading with the plurality of trade connections in such a manner that the portfolio (procurement and sales proportions of the power generation and electricity commodities) in the vicinity of the efficient frontier can be changed to the portfolio in the vicinity of the latter efficient frontier. Alternatively, the trading position determination section 201 determines the combination of trading with the plurality of trade connections on the basis of data about an intersecting point between the efficient frontier and the latter efficient frontier or a predetermined point in the vicinity of the intersecting point. Determining the trading position particularly from the portfolio in the vicinity of the intersecting point makes it possible to obtain a plan effective for both a case in which various fluctuations occur and a case in which the various fluctuations do not occur. For example, in a trading plan for a day of supply at which a probability of occurrence of an extreme fluctuation in the market price is high, a trading plan effective for both a case in which the price fluctuation occurs and a case in which the price fluctuation does not occur can be laid down.

[Process performed by split-time-based split order planning section 30]

In the process performed by the split-time-based split order planning section 30 in Steps S301 to S304, the split-time-based split order planning section 30 generates trading and ordering data related to orders placed on the trade connections and an instruction of the orders during a trading period during which the sales business operator can conduct electricity trading with the trade connections and the markets (it is noted that since the electricity is supplied to the customers continuously and consecutively, the electricity trading is conducted while subdividing the trading period into time zones at predetermined intervals (for example, intervals of 30 minutes or four hours), trading of the power generation and the negawatt power to be provided for the supply of the electricity in each of the time zones is conducted on the assumption that a predetermined period before the time zone in which the electricity is actually supplied as the trading period (for example, period from 17:00 one day before the day of delivery until one hour before the time of delivery, from 48 hours to 24 hours before the time of delivery, from 24 hours to one hour before the time of delivery, from ten days to three days before the day of delivery). The orders are placed stepwise in a plurality of planned trading periods into which the trading period is subdivided, so that it is possible to lay down an economical order plan responding to the fluctuation in the market price and the like during the trading period. Details of the process in Steps S301 to S304 will next be described.

(Step S301) The trading and ordering time splitting section 301 receives a value of each trading position described above, and splits the trading quantity in such a manner that the trading quantity of commodities for each position (contracted electric energy (kW)) is made uniform as a target quantity for procurement (finishing position) of commodities by the trade connections and the markets during the trading period.

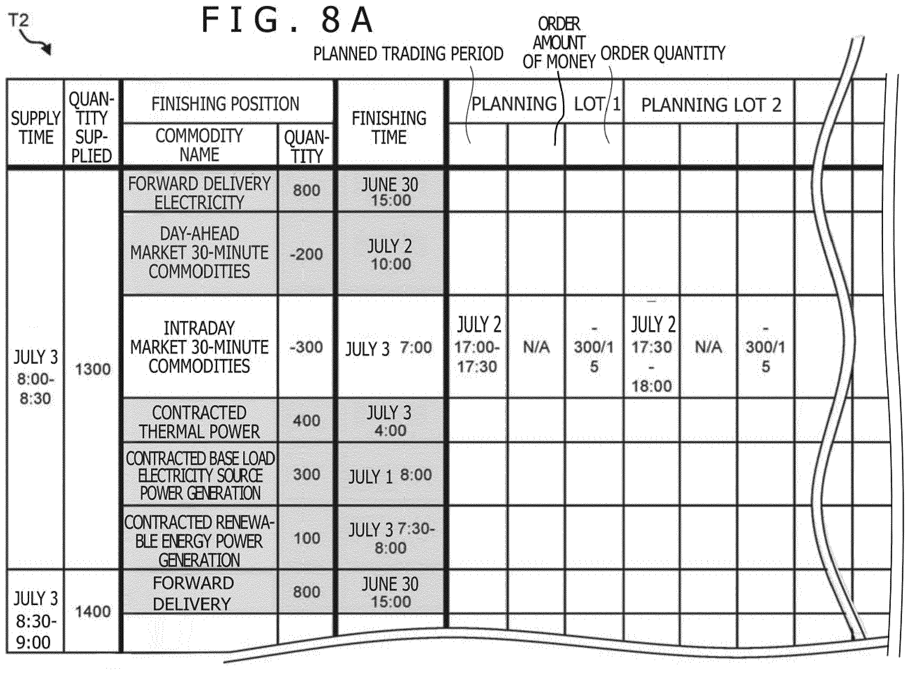

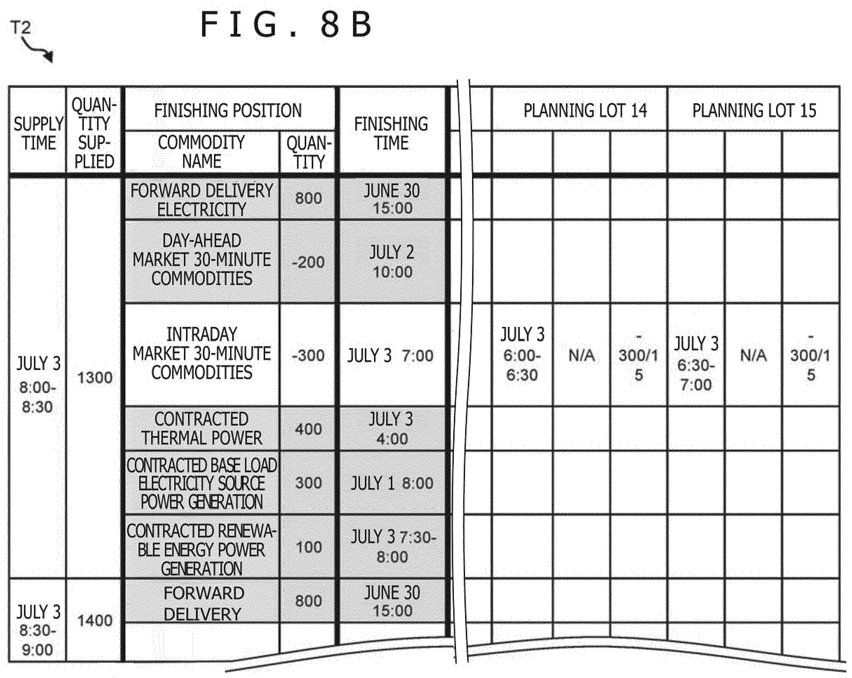

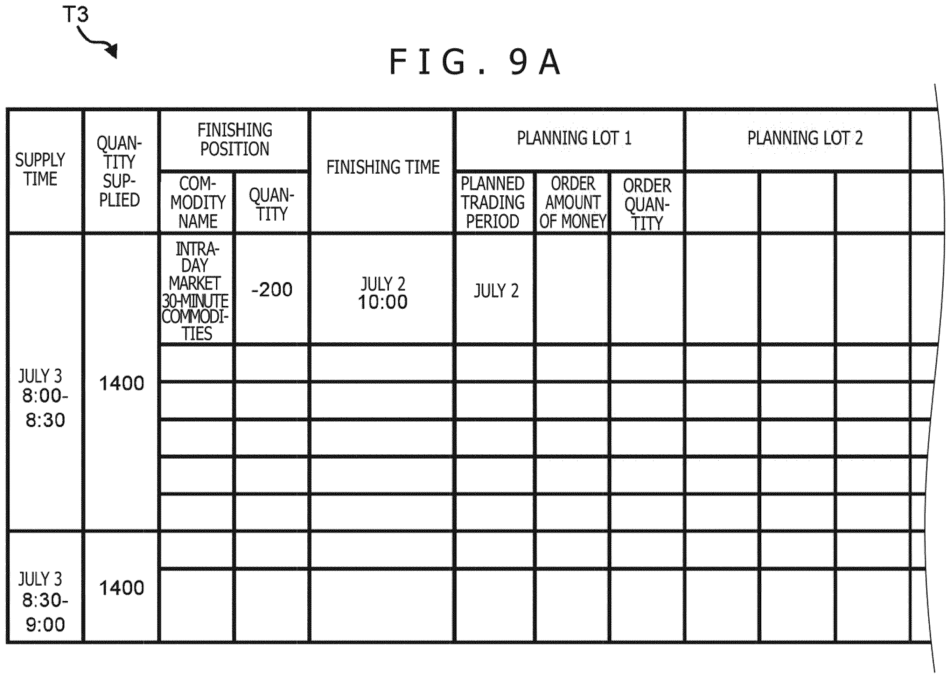

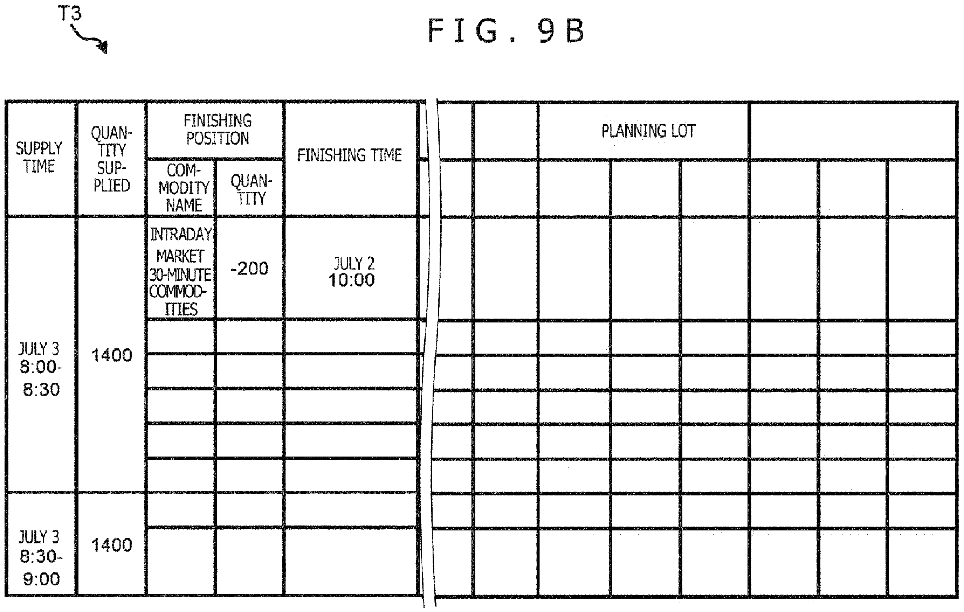

The split values are stored in a target order transition table T2 depicted in FIG. 8 or a target order transition table T3 depicted in FIG. 9. In the target order transition table T2 of FIG. 8, an example of data about 30-minute commodities sold in the intraday market at wholesale is described. With an aim that finishing time is 7:00 on July 3 and the finishing position is -300 kW (indicating a position of buy trading of 300 kW), contracting trading corresponding to (-300/15) kW is set as the target value in each of 15 planning lots into which the trading quantity is split is assumed as the target value. While the trading period is subdivided into 30-minute planned trading periods in the example of FIG. 8, the planned trading periods are not limited to those depicted in FIG. 8 and, for example, may be 10-minute planned trading periods or 2-hour planned trading periods longer in intervals than those depicted in FIG. 8. Furthermore, split order units are referred to as "planning lots." The planning lots may be created for each of the electricity commodities. This can improve efficiency of management of the trading plan and the trading actual record by, for example, setting longer the planned trading periods for the commodities for which the number of bids is smaller, and setting shorter the planned trading periods for the commodities for which the number of bids is larger.

The trading and ordering time splitting section 301 may perform splitting such that the trading amount of money is made uniform as an alternative to the present embodiment. In another alternative, the trading and ordering time splitting section 301 may perform splitting such that a weighted sum of the trading quantity and the dispersion value of the trading quantity is made uniform. In yet another alternative, the trading and ordering time splitting section 301 may perform splitting such that a weighted sum of the trading amount of money and the dispersion value of the trading amount of money is made uniform.

Preferably, with respect to the orders in the planned trading periods into which the trading period is subdivided, the trading and ordering time splitting section 301 corrects a value of order data in each of the planned trading periods to increase or reduce the value thereof depending on a magnitude of an error in future quantity estimation that is a value of convergence estimation related to the planned trading period. It is thereby possible to preferentially execute trading in the planned trading period with a minor error and to execute a trading plan that can stably realize a target trading quantity and target trading returns.

Furthermore, the trading and ordering time splitting section 301 preferably performs a process for calculating a degree of mismatch among the efficient frontiers (or trading positions) at each point in time of the trading period (for example, the degree of mismatch with respect to distances between centers of gravity of points (portfolios) contained in a set of each efficient frontier) calculated in Step S201, and for reducing the trading quantities in the planned trading periods in ascending order of time in a case in which the degree of mismatch is high. It is thereby possible to obtain a trading result that avoids occurrence of a situation in which procurement configurations of power generation and electricity commodities cannot be changed, resulting in uneconomical trading when the efficient frontier fluctuates in the latter period of the plan.

(Step S302) The trading and ordering data determination section 302 performs a process, which is related to orders in the planned trading periods, for referring to the target order transition table T2, determining the value of the trading and ordering data about the procurement of commodities to the markets in each of the planned trading periods, and transmitting the data to the market ordering terminal 5000. When a target value M of the trading quantity to be contracted is given, price data X and data about a bid quantity O are generated as expressed by (Equations 1).

[Equation 1]

$$X = f(R, P, \sigma), O = \frac{M}{R} \cdots (1)$$

In Equations 1, M is a variable designating the bid quantity (electric energy serving as the open position), R is a variable designating a target contract rate, and P and $\sigma$ are variables indicating the market condition (condition), where P is an expected value of a trading price and $\sigma$ is a variable indicating a dispersion of the trading price. Function f is a function for giving the price X that is a price at which trading is completed (which can be contracted) at the rate R from a confidence interval defined from a contracted price distribution by referring to a numerical table (for example, t-distribution table) indicating market-related statistical nature (for example, the confidence interval for a contract at a probability of 95% is (P $\pm$ 1$\sigma$) and a contract can be expected at 95% by designating a price of P + $\sigma$ in a case of buy trading). R is a value into which a user's designated value is substituted through the input/output interface, for example, 0.1 to 0.9.

(Step S303) The power generation plan processing section 303 performs a process for simulating a power generation operation plan known as a generator startup/shutdown plan and a load allocation plan to the contracted power generation business operators. In a case of obtaining a result indicating that the plan is operational by the simulation, the power generation plan processing section 303 transmits data to the power generation ordering terminal 5100. In a case of a simulation result indicating that the plan is not operational, the power generation plan processing section 303 outputs an alert indication to the input/output interface 70.

(Step S304) The electric storage etc. demand planning processing section 304 performs a process for simulating a power conservation plan in a contracted DR (demand response) aggregator. In a case of obtaining a result indicating that the plan is operational by the simulation, the electric storage etc. demand planning processing section 304 transmits data to the aggregator ordering terminal 5200. In a case of a simulation result indicating that the plan is not operational, the electric storage etc. demand planning processing section 304 outputs an alert indication to the input/output interface 70.

[Advantages of the present embodiment]

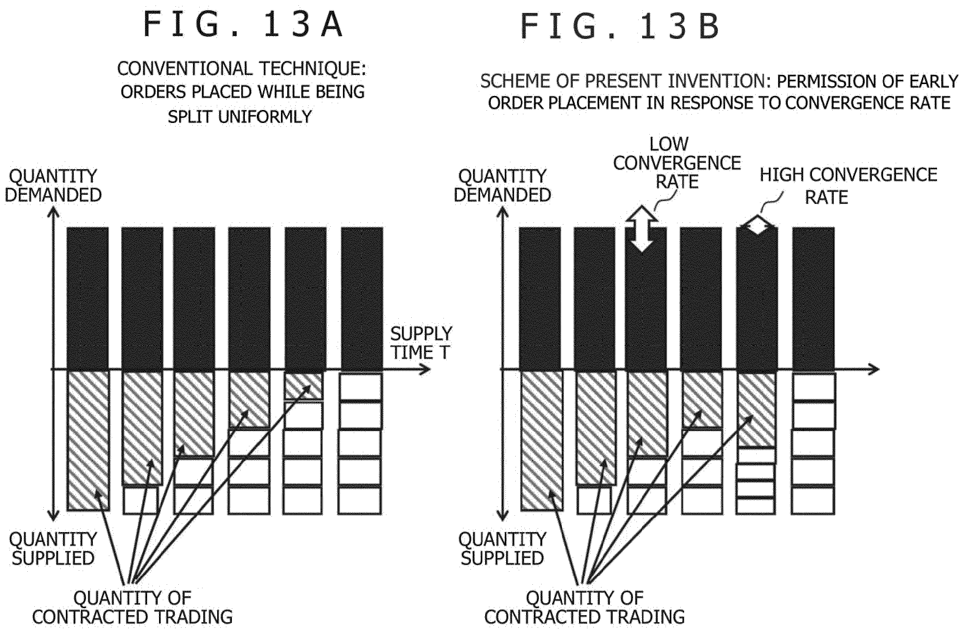

FIGS. 13A and 13B depict order results in a case of executing the trading plan illustrated in the embodiment of the present invention and in a case of not executing the trading plan. FIG. 13A is a conventional example of placing orders by splitting the orders uniformly. FIG. 13B depicts a result of ordering by the trading planning apparatus 1 of the present invention. Using the trading planning apparatus 1 enables an option of the placement of early orders in periods without demand errors (units of delivery and time of delivery), utilization of availability at a low price, and early order placement in response to a convergence rate. In the periods without demand errors, the same thing is true for a convergence rate of the price and a convergence rate of photovoltaic power generation besides the convergence rate of the quantity demanded.

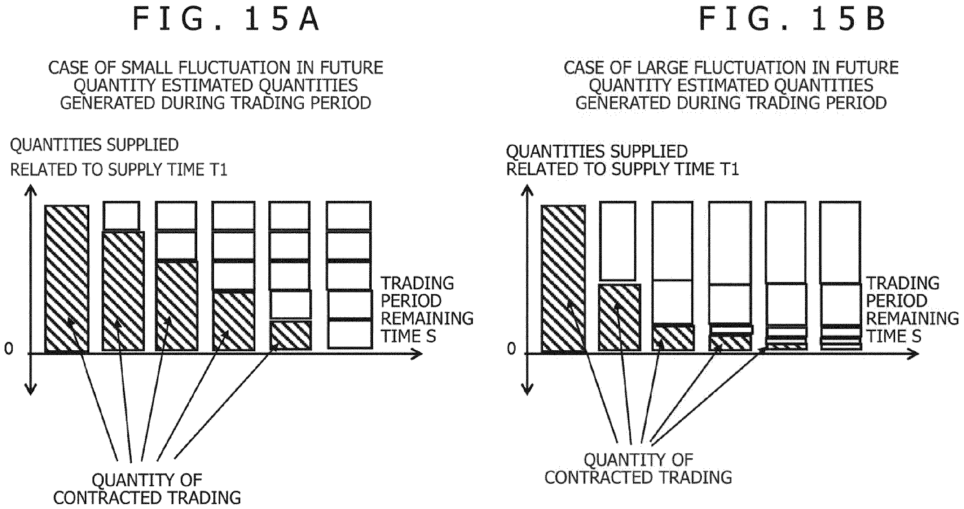

FIGS. 15A and 15B depict transitions of order results of the electricity commodities and the power generation at supply time T1 when the trading plan illustrated in the embodiment of the present invention is executed. FIG. 15A depicts contracted quantities and uncontracted quantities in the order result in a case of a small fluctuation in future quantity estimated quantities generated during the trading period. The uncontracted quantities increase (contracted quantities decrease) in proportion to remaining trading time.

FIG. 15B depicts contracted quantities and uncontracted quantities in the order result in a case of a large fluctuation in the future quantity estimated quantities generated during the trading period. The uncontracted quantities increase (contracted quantities decrease) exponentially with respect to the remaining trading time. This is due to deferring of the orders with respect to a future uncertain market condition and a magnitude of the demand (magnitude of the fluctuations in the estimated quantities of the future quantities).

It is noted that contract/contracted means that a trade is completed for bidding (transmission of the telegraphic messages) to the markets (also referred to as "markets"), that the sales business operator has reached an agreement in the offer of delivery of the electricity with the power generation business operators or the negawatt power supply business operator (aggregator), or that the sales business operator has reached an agreement in the offer of commercial trading.

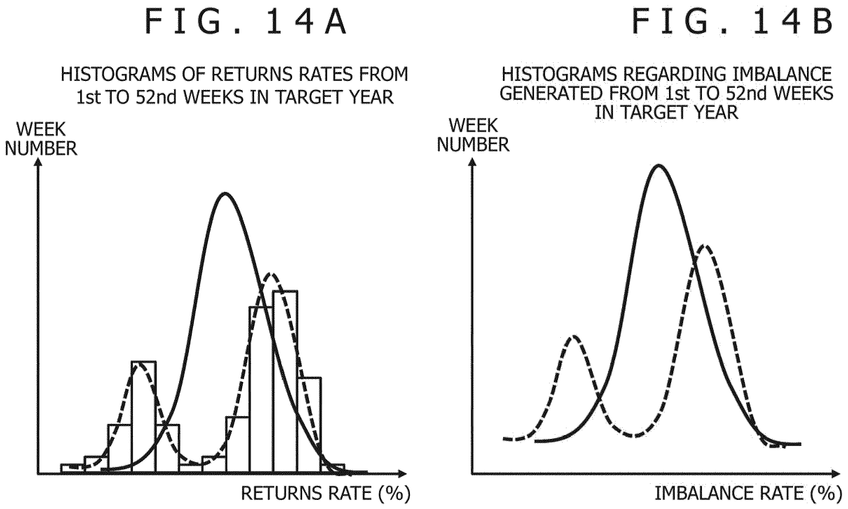

FIGS. 14A and 14B depict an example of results A of returns of the sales business operator and results B of occurrence of a quantity of mismatch (imbalance quantity) between the quantity demanded and the quantities supplied in the case of executing the trading plan in the present embodiment of the present invention and in the case of not executing the trading plan. FIG. 14A depicts a histogram of returns rates from first to 52nd weeks in a target year, and FIG. 14B depicts a histogram related to imbalances generated from the first to 52nd weeks in the target year. A dotted line denotes the result by conventional uniform ordering, and a solid line denotes the result by the trading plan in the embodiment of the present invention.

In the conventional case (dotted lines), orders are fixedly placed from an initial stage of the overall trading without consideration to occurrence of multimodal errors as depicted in FIG. 11B with respect to the prediction of the demand and the market price; thus, returns and the imbalance quantity disperse to spread to tails in a multimodal fashion. According to the trading plan in the embodiment of the present invention, an error between the returns and the imbalance quantity is reduced.

According to the present embodiment, it is possible to execute the trading plan in response to the market trend, the demand fluctuation, and the operational statuses of the trade connections, and to determine the quantity of orders placed on the trade connections and the markets and the order timing as a result of the execution of the trading plan.

<<Second embodiment>> <<Modification: time arbitrage>>

The trading planning apparatus 1 according to the present embodiment is provided with the future quantity estimation section 10 including a demand control quantity estimation section that generates a quantity related to a change in the occurrence of demand or an estimated quantity of data about time, and the order quantity planning section 20 including a demand control limiting section that performs addition or subtraction of the data about the trading positions (indicating values of the trading positions different in time of delivery) on the basis of a value of a demand control quantity.

Such a trading plan makes it possible to execute a plan of trading that gives consideration to demand induction by the demand response or electric storage control.

Furthermore, it is possible to increase the demand (such as the electric storage) at low price time and reduce the demand at high price time. It is noted, however, that a tradable quantity can be limited to a quantity by which the electricity can be absorbed by charge and discharge of a storage battery and to a duration of shift time.

<<Third embodiment>> <<Modification: electric transmission right forward trading>>

The trading planning apparatus 1 according to the present invention is provided with the future quantity estimation section 10 including a supply estimation section that estimates a future quantity of a quantity supplied by the renewable energy power generation and a demand estimation section that estimates future quantities of quantities demanded by the contracted customers, and the order quantity planning section 20 including the trading position determination section 201 that sells the power generation in response to a quantity by which the electricity generated by the renewable energy surpasses the quantities demanded.

Such a trading plan makes it possible to execute a trading plan capable of committing the generated electricity to the supply.

Furthermore, the trading planning apparatus 1 according to the present embodiment is provided with the future quantity estimation section 20 including an estimation section that estimates future quantities of free capacities of the electric transmission lines and the interconnection lines, and the split-time-based split order planning section 30 including an electric transmission line utilization planning section that lays down an electric transmission line utilization plan.

Such a trading plan makes it possible to execute a trading plan capable of avoiding the occurrence of a situation of shutting down the power generation by the renewable energy due to the saturation of the electric transmission lines and to commit the generated electricity to the supply through the electric transmission lines and the interconnection lines. It is thereby possible to achieve trading also reflective of an economic value of a reduction in a sunk cost generated by stopping the renewable energy.

<<Fourth embodiment>> <<Reserve market trading>>

The trading planning apparatus 1 according to the present embodiment is provided with the future quantity estimation section 10 including an estimation section which estimates estimated quantities of future quantities related to reserve market trading (for example, estimated quantities of a price and a trading quantity of the reserve market trading), and the order quantity planning section 20 including the trading position determination section 201 which determines a quantity provided to a reserve, updates data related to the quantity demanded in response to the quantity provided to the reserve, and calculates the trading position.

Such a trading plan makes it possible to execute a plan of trading including reserve-related market trading guaranteed to be provided when needed by external business operators and difficult to buy back.

Furthermore, the trading planning apparatus 1 according to the present embodiment can calculate the value of the convergence estimation of estimating estimated quantities of the data (for example, dispersion and likelihood values) related to the errors in the future quantities estimated from the actual record values, and lay down an order quantity plan or a time splitting plan.

It is noted that the present invention is not limited to the embodiments described above but encompasses various modifications. In addition, the configuration of a certain embodiment can be partially replaced by the configuration of the other embodiment or the configuration of the other embodiment can be added to the configuration of the certain embodiment. Moreover, for a part of the configuration of each embodiment, addition, deletion, and/or replacement of the other configuration can be made.

Description of Reference Characters

    1: Trading planning apparatus
    10: Future quantity estimation section
    20: Order quantity planning section
    30: Split-time-based split order planning section
    40: Storage device
    50: CPU
    60: Main memory
    70: Input/output interface
    80: Network interface
    101: Demand fluctuation estimation section
    102: Supply fluctuation estimation section
    103: Market fluctuation prediction section
    104: Convergence estimation section
    201: Trading position determination section
    202: Trading cumulative quantity storage section
    301: Trading time splitting section
    302: Trading and ordering data determination section
    303: Power generation plan processing section
    304: Electric storage etc. demand planning processing section
    305: Target order transition table

**Claims**

1. A trading planning apparatus comprising:
   an order quantity planning section including a trading position determination section determining trading quantities with a plurality of trade connections from a trading cumulative quantity and estimated data about future quantities related to demand and the trade connections.

2. The trading planning apparatus according to claim 1, wherein
   the order quantity planning section includes
   a data table in which positive and negative values can be taken as data related to each of a plurality of types of trading.

3. The trading planning apparatus according to claim 1 or 2, comprising:
   a split-time-based split order planning section including a trading and ordering data determination section generating trading and ordering data containing data about an order price or an order quantity related to trading and ordering in each of planned trading periods that are periods into which a trading period, during which trading can be conducted, is subdivided.

4. The trading planning apparatus according to any one of claims 1 to 3, comprising:
   a future quantity estimation section including a convergence estimation section estimating estimated quantities of data related to errors in the future quantities estimated from actual record values.

5. The trading planning apparatus according to claim 1, wherein
   the order quantity planning section includes
   the trading position determination section increasing or reducing the trading quantity of any of the trade connections when a difference between a sum of the trading quantities of all of the trade connections and a future quantity demanded is equal to or greater than a predetermined value,
   the trading position determination section increasing a quota of trading with one certain trade connection in a case in which an estimated value of a trading price with the certain trade connection is lower than a trading price related to trading cumulation of all types of trading, and reducing the quota of the trading with the certain trade connection in a case in which the estimated value of the trading price with the certain trade connection is higher than the trading price related to the trading cumulation of all types of trading, or
   the trading position determination section calculating a combination of trading on a basis of an efficient frontier calculated from expected returns by trading and a risk of the expected returns, calculating a latter trading efficient frontier from data in a range in which future expected returns or a future expected return dispersion changes in a latter period of the trading period, and determining the combination of trading with the plurality of trade connections on a basis of data about an intersecting point between the efficient frontier and the latter efficient frontier or a predetermined point in a vicinity of the intersecting point.

6. The trading planning apparatus according to claim 1 or 2, wherein
   the order quantity planning section
   reduces a trading quantity quota to any of the trade connections for which a value of data related to an error in a trading price of each of the trade connections increases, and increases the trading quantity quota to any of the trade connections for which the data related to the error decreases.

7. The trading planning apparatus according to claim 3, wherein
the split-time-based split order planning section includes
a trading and ordering time splitting section splitting an order quantity to each of the trade connections into target values related to temporal transitions of an order during the trading period.

8. The trading planning apparatus according to claim 1 or 2, comprising:
a split-time-based split order planning section that increases or reduces a value of order data in each of the planned trading periods depending on a magnitude of an error in future quantity estimation related to each planned trading period, with respect to orders in the planned trading periods into which the trading period is subdivided.

9. The trading planning apparatus according to claim 3, wherein
the split-time-based split order planning section includes
the trading and ordering data determination section generating data about a target trading quantity in each of the planned trading periods at predetermined intervals generated on a basis of data about a target order transition, and creating the trading and ordering data containing a price obtained by performing weight addition between an estimated trading price and an estimated trading price error in response to a difference between the target trading quantity and a trading quantity actual record,
the trading and ordering data determination section generating data related to an amount of money of trading conducted in each of the planned trading periods at the predetermined intervals on a basis of the estimated data about the future quantities and creating the trading and ordering data, or the trading and ordering data determination section generating the trading and ordering data from the data about the amount of money of the trading obtained by adding or subtracting a value, which is obtained by multiplying an estimated quantity of an error in estimated quantities of the future quantities by a coefficient, to or from the amount of money of the trading, or the trading and ordering data determination section calculating a weighted addition value between data related to a price during the trading period and data related to convergence, comparing the calculated weighted addition value with a seller bid price in a market to determine a magnitude relationship, and generating the trading and ordering data.

10. The trading planning apparatus according to claim 1, wherein
the order quantity planning section
determines buy order quantities of commodities overlapping in time of delivery and a trading position in a range of an opposite position limit value limiting a sell order quantity.

11. A trading planning apparatus comprising:

a future quantity estimation section including a demand control quantity estimation section generating a quantity related to a change in occurrence of demand or an estimated quantity of data about time; and
an order quantity planning section including a demand control limiting section performing addition or subtraction of data about trading positions, which indicates values of the trading positions different in time of delivery, on a basis of a value of a demand control quantity.

12. The trading planning apparatus according to claim 11, wherein
the future quantity estimation section includes:

a supply estimation section estimating a future quantity of a quantity supplied by renewable energy power generation; and
a demand estimation section estimating a future quantity of a quantity demanded by a contracted customer, and wherein
the order quantity planning section includes
a trading position determination section selling power generation in response to a quantity by which electricity generated by renewable energy surpasses the quantity demanded.

13. The trading planning apparatus according to claim 11, wherein
the future quantity estimation section includes
an estimation section estimating future quantities of free capacities of an electric transmission line and an interconnection line, and wherein
the trading and planning apparatus further comprises a split-time-based split order planning section including an electric transmission line utilization planning section laying down a utilization plan of the electric transmission line.

14. The trading planning apparatus according to claim 11, wherein
the future quantity estimation section includes
an estimation section estimating estimated quantities of future quantities related to reserve market trading, and wherein

the order quantity planning section includes
a trading position determination section determining
a quantity provided to a reserve, updating data related to a quantity demanded in response to the quantity provided to the reserve, and calculating a trading position.

**15.** A trading planning method comprising:

a first step of determining trading quantities with a plurality of trade connections from a trading cumulative quantity and estimated data about future quantities related to demand and the trade connections;

a second step of generating trading and ordering data containing data about an order price or an order quantity related to trading and ordering in each of planned trading periods that are periods into which a trading period, during which trading can be conducted, is subdivided; and

a third step of estimating estimated quantities of data related to errors in the future quantities estimated from actual record values.

# FIG. 1A

TRADING PLANNING APPARATUS — 1

FUTURE QUANTITY ESTIMATION SECTION — 10

1000 — DEMAND SYSTEM 1-N

2000 — POWER GENERATION BUSINESS OPERATION SYSTEM 1

3100 — MARKET B SYSTEM

MARKET A SYSTEM — 3000

SALES BUSINESS OPERATION SYSTEM 2-L — 4000

POWER GENERATION BUSINESS OPERATION SYSTEM 2-K — 2000

101 — DEMAND FLUCTUATION ESTIMATION SECTION

102 — SUPPLY FLUCTUATION ESTIMATION SECTION

103 — MARKET FLUCTUATION PREDICTION SECTION

104 — CONVERGENCE ESTIMATION SECTION

A B C D

# FIG. 1B

# FIG. 1C

TRADING PLANNING APPARATUS ~ 1

E — POWER GENERATION PLAN DATA

DEMAND PLAN DATA

F — POWER GENERATION PLAN DATA

G — CONTRACT DATA

5000

MARKET ORDERING TERMINAL

30

305 — TARGET ORDER TRANSITION TABLE

H →

I J K L → 302 — TRADING AND ORDERING DATA DETERMINATION SECTION

N → 303 — POWER GENERATION PLAN PROCESSING SECTION

5100 — POWER GENERATION ORDERING TERMINAL

M → 304 — ELECTRIC STORAGE etc. DEMAND PLAN PROCESSING SECTION

AGGREGATOR ORDERING TERMINAL

5200

SPLIT-TIME-BASED SPLIT ORDER PLANNING SECTION

# FIG. 2A

TRADING PLANNING APPARATUS 1

**STORAGE DEVICE** 40

**FUTURE QUANTITY ESTIMATION SECTION** 10

- 101 — DEMAND FLUCTUATION ESTIMATION SECTION
- 102 — SUPPLY FLUCTUATION ESTIMATION SECTION
- 103 — MARKET FLUCTUATION PREDICTION SECTION
- 104 — CONVERGENCE ESTIMATION SECTION

**ORDER QUANTITY PLANNING SECTION** 20

- 202 — TRADING CUMULATIVE QUANTITY STORAGE SECTION
- 201 — TRADING POSITION DETERMINATION SECTION

**SPLIT-TIME-BASED SPLIT ORDER PLANNING SECTION** 30

- 301 — TRADING AND ORDERING TIME SPLITTING SECTION
- 305 — TARGET ORDER TRANSITION TABLE
- 302 — TRADING AND ORDERING DATA DETERMINATION SECTION
- 303 — POWER GENERATION PLAN PROCESSING SECTION
- 304 — ELECTRIC STORAGE etc. DEMAND PLAN PROCESSING SECTION

A

# FIG. 2B

A

90

Xx1 Xx2 2xx3 Xx4

| CPU | MAIN MEMORY | EXTERNAL COMMUNICATION TERMINAL | KEYBOARD | DISPLAY DEVICE | NETWORK INTERFACE |

71 72 73

50 60 INPUT/OUTPUT INTERFACE 80

TRADING PLANNING APPARATUS 1 70

EP 3 611 688 A1

# FIG. 3A

EP 3 611 688 A1

# F I G . 3 B

FIG. 3C

Ph.4 ELECTRICITY TRADING PROCESS (1 DAY BEFORE)

Ph.5 ELECTRICITY TRADING PROCESS (APPOINTED DAY)

Ph.6 ELECTRICITY TRADING PROCESS (DURING DELIVERY)

TRADING SETTLEMENT

EP 3 611 688 A1

# FIG. 3D

30-MINUTE
COMMODITIES
DELIVERY PERIOD

BLOCK TRADING
DELIVERY PERIOD

# F I G . 4 A

CONTRACTED CUSTOMER

1000

DEMAND SYSTEM 1

1000

DEMAND SYSTEM 2

DEMAND SYSTEM N

1000

6000

INTERMEDIATE VIRTUAL DB 1

SALES BUSINESS OPERATION SYSTEM 1

4000

TRADING PLANNING APPARATUS 1

B

C

D

E

POWER GENERATION BUSINESS OPERATION SYSTEM 1

2000

F

G

H

A

EP 3 611 688 A1

# FIG. 4B

A

**OTHER CUSTOMER** 1000

6000

**OTHER ELECTRICITY BUSINESS OPERATOR** 4000

DEMAND SYSTEM N+1

DEMAND SYSTEM N+2

1000

DEMAND SYSTEM N+M

1000

INTERMEDIATE VIRTUAL DB 2

4000

INTERMEDIATE VIRTUAL DB K

6000

SALES BUSINESS OPERATION SYSTEM 2

I
J
K

SALES BUSINESS OPERATION SYSTEM L

L
M
N
O

POWER GENERATION BUSINESS OPERATION SYSTEM 2

2000

P
Q

POWER GENERATION BUSINESS OPERATION SYSTEM K

R
S
T

2000

U

EP 3 611 688 A1

# FIG. 4C

# FIG. 5A

```
        ┌─────────────┐
        │    START    │
        └──────┬──────┘
               │
    ┌ ─ ─ ─ ─ ─│─ ─ ─ ─ ─ ┐  ⌐ S1
    │          ▼           │
    │  ┌───────────────┐   │  ⌐ S101
    │  │ DEMAND        │   │
    │  │ FLUCTUATION   │   │
    │  │ ESTIMATION    │   │
    │  │ SECTION       │   │
    │  └───────┬───────┘   │
    │          ▼           │  ⌐ S102
    │  ┌───────────────┐   │
    │  │ SUPPLY        │   │
    │  │ FLUCTUATION   │   │
    │  │ ESTIMATION    │   │
    │  │ SECTION       │   │
    │  └───────┬───────┘   │
    │          ▼           │  ⌐ S103
    │  ┌───────────────┐   │
    │  │ MARKET        │   │
    │  │ FLUCTUATION   │   │
    │  │ PREDICTION    │   │
    │  │ SECTION       │   │
    │  └───────┬───────┘   │
    │          ▼           │  ⌐ S104
    │  ┌───────────────┐   │
    │  │ CONVERGENCE   │   │
    │  │ ESTIMATION    │   │
    │  │ SECTION       │   │
    │  └───────┬───────┘   │
    └ ─ ─ ─ ─ ─│─ ─ ─ ─ ─ ┘
```

S2

TRADING POSITION DETERMINATION SECTION — S201

TRADING CUMULATIVE QUANTITY STORAGE SECTION — S202

A

# FIG. 5B

# FIG. 6A

PERIODIC
RETURNS RATE (%)

Pf2=
(O:4,4H:3,D:1,S:1,M1)

Pf3=(O:1,4H:6,D:1,S:1,M1)

Pf4 =(O:1,4H:2,D:2,S:4,M1)

Pf1=(O:6,4H:1,D1,S:1,M1)

RISK EVALUATION VALUE (%)

# FIG. 6B

PERIODIC
RETURNS RATE (%)

Pf4 =(O:1,4H:2,D:2,S:4,M1)

Pf2=(O:4,4H:3,D:1,S:1,M1)

Pf3=(O:1,4H:6,D:1,S:1,M1)

RISK EVALUATION VALUE (%)

Pf1=(O:6,4H:1,D:1,S1,M1)

# FIG. 6C

PERIODIC
RETURNS RATE (%)

Pf2=
(O:4,4H:3,D:1,S:1,M1)

Pf3=(O:1,4H:6,D:1,S:1,M1)

Pf4 =(O:1,4H:2,D:2,S:4,M1)

RISK EVALUATION VALUE (%)

Pf1=(O:6,4H:1,D:1,S1,M1)

# FIG. 7A

| DELIVERY DATE | QUANTITY SUPPLIED (CORRESPONDING TO QUANTITY DEMANDED) | CONTRACTED THERMAL POWER | CONTRACTED BASE LOAD ELECTRICITY SOURCE POWER GENERATION | CONTRACTED RENEWABLE ENERGY POWER GENERATION | INTRADAY MARKET (30-MINUTE COMMODITIES) |
|---|---|---|---|---|---|
| JULY 3 07:00 | 1200 | 500 | 300 | 0 | |
| JULY 3 07:30 | 1250 | 500 | 300 | 0 | |
| JULY 3 08:00 | 1300 | 400 | 300 | 100 | -300 |
| JULY 3 08:30 | 1500 | 400 | 300 | 100 | -100 |
| JULY 3 09:00 | 1500 | 400 | 300 | 100 | -100 |
| JULY 3 09:30 | 1500 | 400 | 300 | 100 | -100 |
| JULY 3 10:00 | 1600 | 400 | 300 | 100 | 0 |
| JULY 3 10:30 | 1600 | 400 | 300 | 100 | 0 |
| JULY 3 11:00 | 1600 | 400 | 300 | 100 | 0 |
| JULY 3 11:30 | 1400 | 400 | 300 | 100 | -200 |
| JULY 3 12:00 | 1400 | 400 | 300 | 100 | |
| JULY 3 12:30 | 1400 | 400 | 300 | 100 | |
| JULY 3 13:00 | 1500 | 400 | 300 | 100 | |
| JULY 3 13:30 | 1500 | 400 | 300 | 100 | |
| JULY 3 14:00 | 1500 | 400 | 300 | 100 | |
| JULY 3 14:30 | 1500 | 400 | 300 | 100 | |
| JULY 3 15:00 | 1200 | 400 | 300 | 100 | |
| JULY 3 15:30 | 1200 | 400 | 300 | 100 | |

T1

# FIG. 7B

| DELIVERY DATE | QUANTITY SUPPLIED (CORRESPONDING TO QUANTITY DEMANDED) | | DAY-AHEAD MARKET (30-MINUTE COMMODITIES) | FORWARD MARKET (4-HOUR COMMODITIES) | NEGAWATT POWER (30-MINUTE COMMODITIES) | |
|---|---|---|---|---|---|---|
| JULY 3 07:00 | 1200 | | 400 | | | |
| JULY 3 07:30 | 1250 | | 450 | | | |
| JULY 3 08:00 | 1300 | | -200 | 800 | | |
| JULY 3 08:30 | 1500 | | -200 | 800 | | |
| JULY 3 09:00 | 1500 | | -200 | 800 | | |
| JULY 3 09:30 | 1500 | | -200 | 800 | | |
| JULY 3 10:00 | 1600 | | -100 | 800 | | |
| JULY 3 10:30 | 1600 | | -100 | 800 | | |
| JULY 3 11:00 | 1600 | | -100 | 800 | | |
| JULY 3 11:30 | 1400 | | -200 | 800 | | |
| JULY 3 12:00 | 1400 | | 700 | | | |
| JULY 3 12:30 | 1400 | | 700 | | | |
| JULY 3 13:00 | 1500 | | 800 | | | |
| JULY 3 13:30 | 1500 | | 800 | | | |
| JULY 3 14:00 | 1500 | | 800 | | | |
| JULY 3 14:30 | 1500 | | 800 | | | |
| JULY 3 15:00 | 1200 | | 200 | | | |
| JULY 3 15:30 | 1200 | | 200 | | | |

T1

# FIG. 8A

| SUPPLY TIME | QUAN-TITY SUP-PLIED | FINISHING POSITION | | FINISHING TIME | PLANNING LOT 1 | | | PLANNING LOT 2 | | | |
|---|---|---|---|---|---|---|---|---|---|---|---|
| | | COMMODITY NAME | QUAN-TITY | | PLANNED TRADING PERIOD | ORDER AMOUNT OF MONEY | ORDER QUANTITY | PLANNED TRADING PERIOD | ORDER AMOUNT OF MONEY | ORDER QUANTITY | |
| JULY 3 8:00-8:30 | 1300 | FORWARD DELIVERY ELECTRICITY | 800 | JUNE 30 15:00 | | | | | | | |
| | | DAY-AHEAD MARKET 30-MINUTE COMMODITIES | -200 | JULY 2 10:00 | | | | | | | |
| | | INTRADAY MARKET 30-MINUTE COMMODITIES | -300 | JULY 3 7:00 | JULY 2 17:00-17:30 | N/A | -300/15 | JULY 2 17:30-18:00 | N/A | -300/15 | |
| | | CONTRACTED THERMAL POWER | 400 | JULY 3 4:00 | | | | | | | |
| | | CONTRACTED BASE LOAD ELECTRICITY SOURCE POWER GENERATION | 300 | JULY 1 8:00 | | | | | | | |
| | | CONTRACTED RENEWA-BLE ENERGY POWER GENERATION | 100 | JULY 3 7:30-8:00 | | | | | | | |
| JULY 3 8:30-9:00 | 1400 | FORWARD DELIVERY | 800 | JUNE 30 15:00 | | | | | | | |

T2

# FIG. 8 B

T2

| SUPPLY TIME | QUAN-TITY SUP-PLIED | FINISHING POSITION | | FINISHING TIME | | PLANNING LOT 14 | | | PLANNING LOT 15 | | |
|---|---|---|---|---|---|---|---|---|---|---|---|
| | | COMMODITY NAME | QUAN-TITY | | | | | | | | |
| JULY 3 8:00-8:30 | 1300 | FORWARD DELIVERY ELECTRICITY | 800 | JUNE 30 15:00 | | | | | | | |
| | | DAY-AHEAD MARKET 30-MINUTE COMMODITIES | -200 | JULY 2 10:00 | | | | | | | |
| | | INTRADAY MARKET 30-MINUTE COMMODITIES | -300 | JULY 3  7:00 | | JULY 3 6:00-6:30 | N/A | -300/15 | JULY 3 6:30-7:00 | N/A | -300/15 |
| | | CONTRACTED THERMAL POWER | 400 | JULY 3 4:00 | | | | | | | |
| | | CONTRACTED BASE LOAD ELECTRICITY SOURCE POWER GENERATION | 300 | JULY 1 8:00 | | | | | | | |
| | | CONTRACTED RENEWA-BLE ENERGY POWER GENERATION | 100 | JULY 3 7:30-8:00 | | | | | | | |
| JULY 3 8:30-9:00 | 1400 | FORWARD DELIVERY | 800 | JUNE 30 15:00 | | | | | | | |

EP 3 611 688 A1

# FIG. 9A

T3

EP 3 611 688 A1

| SUPPLY TIME | QUAN-TITY SUP-PLIED | FINISHING POSITION | | FINISHING TIME | PLANNING LOT 1 | | | PLANNING LOT 2 | | | |
|---|---|---|---|---|---|---|---|---|---|---|---|
| | | COM-MODITY NAME | QUAN-TITY | | PLANNED TRADING PERIOD | ORDER AMOUNT OF MONEY | ORDER QUAN-TITY | | | | |
| JULY 3 8:00-8:30 | 1400 | INTRA-DAY MARKET 30-MINUTE COMMODI-TIES | -200 | JULY 2 10:00 | JULY 2 | | | | | | |
| | | | | | | | | | | | |
| | | | | | | | | | | | |
| | | | | | | | | | | | |
| | | | | | | | | | | | |
| | | | | | | | | | | | |
| JULY 3 8:30-9:00 | 1400 | | | | | | | | | | |

**FIG. 9B**

T3

| SUPPLY TIME | QUAN-TITY SUP-PLIED | FINISHING POSITION | | FINISHING TIME | | | | PLANNING LOT | | | | | | |
|---|---|---|---|---|---|---|---|---|---|---|---|---|---|---|
| | | COM-MODITY NAME | QUAN-TITY | | | | | | | | | | | |
| JULY 3 8:00- 8:30 | 1400 | INTRADAY MARKET 30-MINUTE COMMOD-ITIES | -200 | JULY 2 10:00 | | | | | | | | | | |
| | | | | | | | | | | | | | | |
| | | | | | | | | | | | | | | |
| | | | | | | | | | | | | | | |
| | | | | | | | | | | | | | | |
| | | | | | | | | | | | | | | |
| | | | | | | | | | | | | | | |
| JULY 3 8:30- 9:00 | 1400 | | | | | | | | | | | | | |

# FIG. 10A

PATTERN 1

# FIG. 10D

PATTERN 4

# FIG. 10B

PATTERN 2

# FIG. 10E

PATTERN 5

# FIG. 10C

PATTERN 3

# FIG. 10F

PATTERN 6

EP 3 611 688 A1

# FIG. 11A

PREDICTED
VALUE x

q3

q2

q1

0          p1              p2          p3

PREDICTION
TARGET TIME p

# FIG. 11B

FREQUENCY DISTRIBUTION OF PREDICTED
VALUES x AT TIME p2 IN PHASE t1

FREQUENCY

0        q1            q2          q3

PREDICTED
VALUE x

# FIG. 11C

PREDICTED
VALUE x

q3

q2

q1

0          p1          p2          p3

PREDICTION
TARGET TIME p

# FIG. 11D

FREQUENCY DISTRIBUTION OF PREDICTED
VALUES x AT TIME p2 IN PHASE t2

FREQUENCY

0          q1          q2          q3

PREDICTED
VALUE x

F I G . 1 2

TRANSITIONS OF "PREDICTED VALUE x AT TIME p2" IN EACH PREDICTION PHASE

EP 3 611 688 A1

# FIG. 13A

CONVENTIONAL TECHNIQUE:
ORDERS PLACED WHILE BEING
SPLIT UNIFORMLY

QUANTITY
DEMANDED

SUPPLY
TIME T

QUANTITY
SUPPLIED

QUANTITY OF
CONTRACTED TRADING

# FIG. 13B

SCHEME OF PRESENT INVENTION: PERMISSION OF EARLY
ORDER PLACEMENT IN RESPONSE TO CONVERGENCE RATE

QUANTITY
DEMANDED

LOW
CONVERGENCE
RATE

HIGH CONVERGENCE
RATE

QUANTITY
SUPPLIED

QUANTITY OF
CONTRACTED TRADING

EP 3 611 688 A1

# FIG. 14A

HISTOGRAMS OF RETURNS RATES FROM
1st TO 52nd WEEKS IN TARGET YEAR

WEEK
NUMBER

RETURNS RATE (%)

# FIG. 14B

HISTOGRAMS REGARDING IMBALANCE
GENERATED FROM 1st TO 52nd WEEKS
IN TARGET YEAR

WEEK
NUMBER

IMBALANCE RATE (%)

# FIG. 15A

CASE OF SMALL FLUCTUATION IN FUTURE
QUANTITY ESTIMATED QUANTITIES
GENERATED DURING TRADING PERIOD

QUANTITIES SUPPLIED
RELATED TO SUPPLY TIME T1

0

TRADING
PERIOD
REMAINING
TIME S

QUANTITY OF
CONTRACTED TRADING

# FIG. 15B

CASE OF LARGE FLUCTUATION IN FUTURE
QUANTITY ESTIMATED QUANTITIES
GENERATED DURING TRADING PERIOD

QUANTITIES SUPPLIED
RELATED TO SUPPLY TIME T1

0

TRADING
PERIOD
REMAINING
TIME S

QUANTITY OF
CONTRACTED TRADING

EP 3 611 688 A1

# EP 3 611 688 A1

**INTERNATIONAL SEARCH REPORT**

| International application No. |
|---|
| PCT/JP2018/010904 |

| A. CLASSIFICATION OF SUBJECT MATTER |
|---|
| Int.Cl. G06Q30/08(2012.01)i, G06Q50/06(2012.01)i |

According to International Patent Classification (IPC) or to both national classification and IPC

| B. FIELDS SEARCHED |
|---|
| Minimum documentation searched (classification system followed by classification symbols) |
| Int.Cl. G06Q10/00-99/00 |

Documentation searched other than minimum documentation to the extent that such documents are included in the fields searched

| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| X<br>Y | JP 2016-62191 A (TOSHIBA CORP.) 25 April 2016,<br>paragraphs [0060]-[0072], fig. 2, 9, 10 (Family:<br>none) | 1,3-10,15<br>2 |
| X<br>Y | JP 2006-172246 A (MITSUBISHI ELECTRIC CORP.) 29<br>June 2006, paragraphs [0010]-[0019], fig. 2-5<br>(Family: none) | 11-13<br>2,14 |
| Y | JP 2016-134939 A (HITACHI, LTD.) 25 July 2016,<br>claim 1 & US 2018/0025423 A1, claim 1 & GB 2549426<br>A & WO 2016/113723 A1 | 14 |

☒ Further documents are listed in the continuation of Box C.     ☐ See patent family annex.

| | |
|---|---|
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 14 June 2018 (14.06.2018) | 26 June 2018 (26.06.2018) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**INTERNATIONAL SEARCH REPORT**

International application No.

PCT/JP2018/010904

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2015-164026 A (THE CHUGOKU ELECTRIC POWER CO., INC.) 10 September 2015, entire text, all drawings (Family: none) | 1-15 |
| A | JP 2016-33801 A (UNIVERSITY OF TSUKUBA) 10 March 2016, entire text, all drawings (Family: none) | 1-15 |
| A | US 2002/0194113 A1 (ABB GROUP SERVICES CENTER AB) 19 December 2002, whole document & EP 1395931 A1 & WO 2002/103588 A2 | 1-15 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007159239 A

- JP 2008209987 A